# EUROPEAN PATENT APPLICATION

(11) **EP 4 586 694 A1**
(43) Date of publication of application: **16.07.2025**
(21) Application number: 23870652.7
(22) Date of filing: 22.09.2023
(51) Int. Cl.: H04W 48/16, H04W 24/02

(54) **COMMUNICATION METHOD AND APPARATUS**

(30) Priority: 27.09.2022 CN 202211185417
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: Maiwald GmbH
(86) International application number: PCT/CN2023/120853
(87) International publication number: WO 2024/067421

(57) **Abstract**

This application provides a communication method and apparatus, and relates to the field of communication technologies. A core network device obtains request information of a service requester, where the request information includes an identifier of the service requester; the core network device determines, based on the request information, to perform an operation in batches, and performs the operation on a first terminal; and the core network device sends, after determining that the batch operation has been completed on a plurality of terminals in the first terminal, operation information of the plurality of terminals to the service requester. In this manner, the operation performed in batches can reduce signaling exchange and improve processing efficiency.

## Description

### CROSS-REFERENCE TO RELATED APPLICATIONS

This application claims priority to Chinese Patent Application No. 202211185417.0, filed with the China National Intellectual Property Administration on September 27, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a radio frequency identification (radio frequency identification, RFID) technology, after statistics collection is performed on a plurality of operations for a single tag based on the RFID, statistics results are stored or forwarded in batches. However, such batch processing on a single tag cannot meet a service requirement of the passive internet of things (passive IoT, P-IoT, or referred to as the ambient IoT, A-IoT). This method is not applicable to the passive IoT. Therefore, a new tag batch operation method is urgently needed to meet the requirement of the passive IoT.

### SUMMARY

This application provides a communication method and apparatus, to adapt to a batch operation requirement in a third generation partnership project (third generation partnership project, 3GPP) system, reduce signaling exchange, and improve data processing efficiency.

According to a first aspect, this application provides a communication method, including:
A core network device obtains request information of a service requester, where the request information includes an identifier of the service requester; the core network device determines, based on the request information, to perform an operation in batches, and performs the operation on a first terminal; and the core network device sends, after determining that the operation has been completed on a plurality of terminals in the first terminal, operation information of the plurality of terminals to the service requester, where the first terminal is a to-be-operated terminal.

In this application, the core network device identifies terminals to be operated in batches, so that a batch operation can be performed on a plurality of terminals instead of performing a same operation on only one terminal. In this manner, operation signaling exchange can be reduced, and data processing efficiency can be improved. A quantity of first terminals and a quantity of the plurality of terminals vary according to actual scenarios. In actual application, the first terminal may be understood as a subscribed terminal of the service requester, or a terminal that is connected to the service requester in a specific access mode and that is managed by the service requester. This is not specifically limited in this application. In addition, that the core network device determines, based on the request information, to perform the operation in batches may be understood as that the core network device directly determines, based on specific content of the request information, whether to perform the operation in batches, or may be understood as that the core network device presets a determining policy, and determines, based on a content retrieval determining policy of the request information after receiving the request information, whether to perform the operation in batches. This is not specifically limited in this application.

In an optional implementation, the request information further includes at least one of the following:
a first geographical area in which the first terminal is located, an identifier of the first terminal, and operation type indication information.

In this application, the request information includes the foregoing plurality of types, so that the core network device can better determine whether the operation needs to be performed in batches and how to specifically perform the operation in batches.

In an optional implementation, when the request information is the identifier of the service requester, the core network device determines to perform the operation in batches, where the first terminal is a subscribed terminal of the service requester.

In this application, when the request information includes only the identifier of the service requester, the batch operation is directly performed on a terminal, so that the step of determining the batch operation can be reduced, and data processing efficiency can be improved.

In an optional implementation, when the request information is the identifier of the service requester and the first geographical area, the core network device determines to perform the operation in batches, where the first terminal is a subscribed terminal that is of the service requester and that is covered by the first geographical area.

In this application, when the request information includes the identifier of the service requester and the first geographical area, the batch operation is directly performed on a terminal, so that the step of determining the batch operation can be reduced, and data processing efficiency can be improved. In addition, when the request information includes the first geographical area, and a second geographical area queried by the core network device based on subscription data of the service requester is different from the first geographical area, the first terminal is a terminal covered by an intersection set of the second geographical area and the first geographical area.

In an optional implementation, when the request information is the identifier of the service requester and the identifier of the first terminal, if a quantity of identifiers of first terminals is greater than 1, the core network device determines to perform the operation in batches.

In an optional implementation, when the request information is the identifier of the service requester, the identifier of the first terminal, and the operation type indication information corresponding to the first terminal, and the same operation type indication information corresponds to identifiers of a plurality of terminals in the first terminal, the core network device determines to perform the operation in batches.

In this application, when the request information includes the identifier of the service requester, the identifier of the first terminal, and the operation type indication information corresponding to the first terminal, and the same operation type indication information corresponds to identifiers of a plurality of terminals in the first terminal, a batch operation is directly performed on a terminal, so that the step of determining the batch operation can be reduced, and data processing efficiency can be improved.

In an optional implementation, when the request information is the identifier of the service requester, the first geographical area in which the first terminal is located, and the operation type indication information, the core network device determines to perform the operation in batches.

In this application, when the request information includes the identifier of the service requester, the first geographical area in which the first terminal is located, and the operation type indication information, the batch operation is directly performed on a terminal, so that the step of determining the batch operation can be reduced, and data processing efficiency can be improved.

In an optional implementation, the request information is the identifier of the service requester, and the core network device obtains subscription data of the service requester based on the identifier of the service requester, where the subscription data includes: a correspondence between the service requester and an operation type and a correspondence between the service requester and a second geographical area. The core network device performs, based on the subscription data, a batch operation corresponding to the operation type on a plurality of terminals covered by the second geographical area.

In this application, when the request information does not explicitly indicate geographical location information and/or the operation type, related information is obtained from the subscription data to complete a subsequent batch operation procedure, so that data processing efficiency can be improved.

In an optional implementation, when the request information includes the operation type indication information, the operation type of the batch operation is determined based on the operation type indication information.

In this application, specific operations may be performed on different terminals based on the operation type indication information in the request information, thereby improving data processing efficiency.

In an optional implementation, when the request information includes the first geographical area, the core network device sends a first message to an access network device serving the first terminal, where the first message includes an operation instruction and an indication identifier, the operation instruction triggers the access network device to trigger a plurality of random access procedures, the operation instruction is determined based on the operation type, and the indication identifier has an association relationship with the identifier of the service requester; the core network device indicates the access network device to perform, based on the operation instruction, a random access procedure one by one on terminals served by the access network device; the core network device receives a second message from the access network device, where the second message includes an identifier of a second terminal and the indication identifier; and when the operation type is inventory, if determining, based on the indication identifier, that the second terminal is one terminal in the first terminal, the core network device caches the identifier of the second terminal; or when the operation type is read, write, or disable, if determining, based on the indication identifier, that the second terminal is one terminal in the first terminal, the core network device sends read, write, or disable instruction information to the second terminal via the access network device, to obtain and cache operation information of the second terminal.

In this application, when the request information includes first geographical location information, a reported terminal identifier is filtered based on the indication identifier, to ensure that operation information of a terminal for the service requester is sent to the service requester, thereby ensuring data processing accuracy.

In an optional implementation, the core network device queries, based on the indication identifier, an identifier list that is of subscribed terminals of the service requester and that is prestored in the core network device or in the subscription data; and when determining that the identifier list includes the identifier of the second terminal, the core network device determines that the second terminal is one terminal in the first terminal.

In an optional implementation, when the request information includes the identifier of the first terminal, the core network device sends a first message to an access network device serving the first terminal, where the first message includes an operation instruction and X groups of mask ranges, where X≥1, the operation instruction triggers the access network device to trigger a plurality of random access procedures, and the operation instruction is determined based on an operation type; the core network device indicates the access network device to perform, based on the operation instruction, a random access procedure one by one on terminals in the X groups of mask ranges; the core network device receives a second message from the access network device, where the second message includes an identifier of a second terminal; and when the operation type is inventory, if determining that the second terminal is one terminal in the first terminal, the core network device caches the identifier of the second terminal; or when the operation type is read, write, or disable, if determining that the second terminal is one terminal in the first terminal, the core network device sends read, write, or disable instruction information to the second terminal via the access network device, to obtain and cache operation information of the second terminal. In this application, when the request information includes the identifier of the first terminal, a mask range is set to prevent the access network device from sensing specific information of a terminal, so that data processing security can be ensured.

In an optional implementation, that the core network device determines that the operation has been completed on a plurality of terminals in the first terminal includes:
If determining that an operation time threshold is reached, the core network device determines that the operation has been completed on a plurality of terminals in the first terminal.

In this manner, an end occasion of the batch operation can be known, to avoid frequent operations and increase signaling exchange data.

In an optional implementation, the first message further includes an operation time threshold. That the core network device determines that the operation has been completed on a plurality of terminals in the first terminal includes:
The core network device receives a third message from the access network device, where the third message indicates that the operation time threshold is reached; and the core network device determines, based on the third message, that the operation has been completed on a plurality of terminals in the first terminal.

In this manner, an end occasion of the batch operation can be known, to avoid frequent operations and increase signaling exchange data.

In an optional implementation, that the core network device determines that the operation has been completed on a plurality of terminals in the first terminal includes:
If determining that an operation life cycle expires, the core network device determines that the operation has been completed on a plurality of terminals in the first terminal, where the operation life cycle includes at least one of the following: an operation quantity threshold and the X groups of mask ranges.

In this manner, an end occasion of the batch operation can be known, to avoid frequent operations and increase signaling exchange data.

In an optional implementation, the first message further includes at least one of the following: an operation quantity threshold and an operation time threshold. That the core network device determines that the operation has been completed on a plurality of terminals in the first terminal includes:
The core network device receives a third message from the access network device, where the third message indicates that the operation quantity threshold and/or the operation time threshold are/is reached; and the core network device determines, based on the third message, that the operation has been performed in batches on a plurality of terminals in the second terminal.

In this manner, an end occasion of the batch operation can be known, to avoid frequent operations and increase signaling exchange data.

In an optional implementation, after the core network device determines that the operation has been completed on a plurality of terminals in the first terminal, the method further includes: The core network device sends a fourth message to the access network device, where the fourth message indicates the access network device to end performing a random access procedure.

In this manner, an end occasion of the random access can be known, to avoid frequent operations and increase signaling exchange data.

In an optional implementation, when the operation type is inventory, the operation information includes an identifier of a first terminal on which the inventory is successfully performed; or when the operation type is read, the operation information includes an identifier of a first terminal that is successfully read and read data.

According to an actual service requirement, the core network device may send the operation information of the plurality of terminals on which the operation has been completed, and may also send operation information of a terminal on which the operation has not been completed to the service requester. In addition, the operation information of the terminal on which the operation has been completed and the operation information of the terminal on which the operation has not been completed may be sent together or separately. This is not specifically limited in this application.

According to a second aspect, this application provides a communication method, including:
An access network device receives a first message from a core network device, where the first message includes an operation instruction and an indication identifier, the operation instruction triggers the access network device to trigger a plurality of random access procedures, the operation instruction is determined based on an operation type, and the indication identifier has an association relationship with an identifier of a service requester; and the access network device performs, based on the operation instruction, a random access procedure one by one on terminals served by the access network device.

In this application, after reporting terminal operation information to the core network device, the access network device enters next random access without waiting for an instruction of the core network device for performing the next random access. In this manner, data efficiency can be improved, and exchanged signaling can be reduced.

In an optional implementation, the access network device receives an identifier of a second terminal from the second terminal; and the access network device sends a second message to the core network device, where the second message further includes the identifier of the second terminal and the indication identifier.

In an optional implementation, the first message further includes an operation time threshold. The access network device sends a third message to the core network device, where the third message indicates that the operation time threshold is reached.

In an optional implementation, the access network device receives a fourth message from the core network device, where the fourth message indicates the access network device to end performing a random access procedure.

According to a third aspect, this application provides a communication method, including:
An access network device receives a first message from a core network device, where the first message includes an operation instruction and X groups of mask ranges, where X≥1, the operation instruction triggers the access network device to trigger a plurality of random access procedures, and the operation instruction is determined based on an operation type; and the access network device performs, based on the operation instruction, a random access procedure one by one on terminals in the X groups of mask ranges.

In this application, after reporting terminal operation information to the core network device, the access network device enters next random access without waiting for an instruction of the core network device for performing the next random access. In this manner, data efficiency can be improved, and exchanged signaling can be reduced.

In an optional implementation, the access network device receives an identifier of a second terminal from the second terminal; and the access network device sends a second message to the core network device, where the second message further includes the identifier of the second terminal.

In an optional implementation, the first message further includes at least one of the following: an operation time threshold and an operation time threshold. The access network device sends a third message to the core network device, where the third message indicates that the operation time threshold is reached.

In an optional implementation, the access network device receives a fourth message from the core network device, where the fourth message indicates the access network device to end performing a random access procedure.

According to a fourth aspect, an embodiment of this application provides a communication apparatus. The communication apparatus may be an access network device (for example, the access network device in the first aspect, the access network device in the second aspect, or the access network device in the third aspect) or a chip disposed in the access network device, or may be a core network device (for example, the core network device in the first aspect, the core network device in the second aspect, or the core network device in the third aspect) or a chip disposed in the core network device. The communication apparatus has a function of implementing any one of the first aspect to the third aspect. For example, the communication apparatus includes a corresponding module, unit, or means (means) for performing the steps in any one of the first aspect to the third aspect. The function, unit, or means may be implemented by using software, implemented by using hardware, or implemented by hardware executing corresponding software.

In a possible design, the communication apparatus includes a processing unit and a transceiver unit. The transceiver unit may be configured to send and receive signals, to implement communication between the communication apparatus and another apparatus. For example, the transceiver unit is configured to receive request information from a service requester. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal, and the processor executes program instructions, to complete the method in any possible design or implementation of the first aspect to the third aspect. The communication apparatus may further include one or more memories. The memory is configured to be coupled to the processor, and the memory may store a necessary computer program or necessary instructions for implementing the function in any one of the first aspect to the third aspect. The processor may execute the computer program or the instructions stored in the memory. When the computer program is executed or the instructions are executed, the communication apparatus is enabled to implement the method in any possible design or implementation in the first aspect to the third aspect.

In another possible design, the communication apparatus includes a processor. The processor may be configured to be coupled to a memory. The memory may store a necessary computer program or necessary instructions for implementing the function in any one of the first aspect to the third aspect. The processor may execute the computer program or the instructions stored in the memory. When the computer program is executed or the instructions are executed, the communication apparatus is enabled to implement the method in any possible design or implementation in the first aspect to the third aspect.

In still another possible design, the communication apparatus includes a processor and an interface circuit. The processor is configured to: communicate with another apparatus through the interface circuit, and perform the method in any possible design or implementation of the first aspect to the third aspect.

It may be understood that in the fourth aspect, the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, an embodiment of this application provides a communication system. The communication system includes the access network device and the core network device in the first aspect to the third aspect.

According to a sixth aspect, this application provides a chip system. The chip system includes a processor, and may further include a memory, configured to implement the method in any one of the possible designs of the first aspect to the third aspect. The chip system may include a chip, or may include a chip and another discrete component.

According to a seventh aspect, this application further provides a computer-readable storage medium. The computer-readable storage medium stores computer-readable instructions. When the computer-readable instructions are run on a computer, the computer is enabled to perform the method in any one of the possible designs of the first aspect to the third aspect.

According to an eighth aspect, this application provides a computer program product including instructions. When the computer program product runs on a computer, the computer is enabled to perform the method in various embodiments of the first aspect to the third aspect.

For technical effects that can be achieved in the second aspect to the eighth aspect, refer to the descriptions of the technical effects that can be achieved in the corresponding possible design solutions in the first aspect. Details are not described herein again in this application.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of a passive internet of things service;
FIG. 4A is a diagram of a counting procedure;
FIG. 4B is a diagram of a read/write procedure;
FIG. 5 is a schematic flowchart of a communication method according to an embodiment of this application;
FIG. 6A to FIG. 6C are a schematic flowchart of a batch operation according to an embodiment of this application;
FIG. 7A to FIG. 7C are a schematic flowchart of a batch operation according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, a plurality of means two or more than two. Therefore, for implementations of the apparatus and the method, reference may be made to each other, and repeated parts are not described again.

To cope with challenges of wireless broadband technologies and maintain a leading advantage of a 3GPP network, the 3GPP standard group formulates a next generation mobile communication network system (Next Generation System) architecture, referred to as a 5th generation (5th generation, 5G) network architecture. The architecture not only supports access to a 5G core network (core network, CN) by using a radio access technology (for example, a long term evolution (long term evolution, LTE) access technology, a radio access network (radio access network, RAN) access technology, or the like) defined by the 3GPP standard group, but also supports access to a core network by using a non-3GPP (non-3GPP) access technology via a non-3GPP interworking function (non-3GPP interworking function, N3IWF) or a next generation access gateway (next generation packet data gateway, ngPDG).

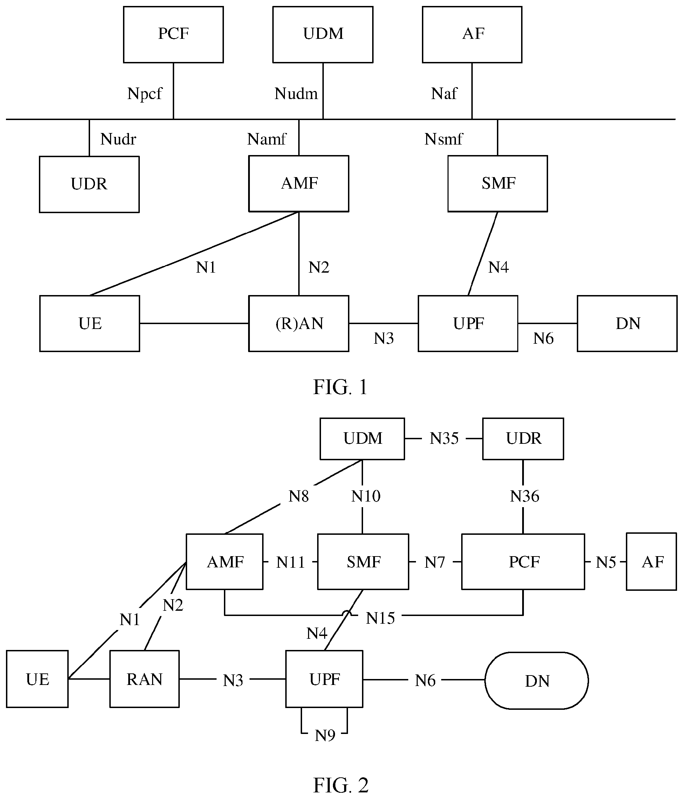

FIG. 1 is a diagram of a 5G network architecture based on a service-oriented architecture. The 5G network architecture shown in FIG. 1 may include an access network device and a core network device. A terminal accesses a data network (data network, DN) via the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal may be user equipment (user equipment, UE), a mobile station, a mobile terminal, or the like. The terminal may be widely used in various scenarios, for example, a device-to-device (device-to-device, D2D) scenario, a vehicle-to-everything (vehicle to everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an urban air transportation vehicle (such as an uncrewed aerial vehicle or a helicopter), a ship, a robot, a mechanical arm, a smart home device, or the like.

The access network device may be a base station (base station), a pole station, an indoor base station (for example, a Lampsite), a home base station (for example, a home NB), a micro base station, an integrated access and backhaul (integrated access and backhaul, IAB) node, a mobile base station, a radio access network (RAN) device, or a wireline access network (wireline access network, WAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, a base station or a module or unit that completes some functions of the base station in a future mobile communication system, for example, a central unit (central unit, CU), a distributed unit (distributed unit, DU), or the like. The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wireline access network device includes but is not limited to: a wireline access gateway (wireline access gateway), a fixed-line phone network device, a switch, and a router.

The access network device and the terminal may be at fixed positions, or may be movable. The access network device and the terminal may be deployed on land, including an indoor or outdoor device, or a handheld or vehicle-mounted device; may be deployed on water; or may be deployed on an airplane, a balloon, and an artificial satellite in the air. An application scenario of the access network device and the terminal is not limited in embodiments of this application.

The AMF network element includes functions such as mobility management, and access authentication/authorization. In addition, the AMF network element is further responsible for transmitting a user policy between the terminal and the PCF network element.

The SMF network element includes functions such as session management, execution of a control policy delivered by a PCF, UPF selection, and assignment of an internet protocol (internet protocol, IP) address of a terminal.

The UPF network element includes functions such as user plane data forwarding, session/flow-level-based charging statistics collection, and bandwidth limitation.

The UDM network element includes functions such as performing of subscription data management, and user access authorization.

The UDR network element includes functions such as storage and retrieval of subscription data, policy data, application data, and other types of data.

The NEF network element is configured to support exposure of capabilities and events.

The AF network element transfers a requirement of an application side for a network side, for example, a quality of service (quality of service, QoS) requirement, user status event subscription, or the like. The AF may be a third-party functional entity, or may be an operator-deployed application service, for example, an IP multimedia subsystem (IP Multimedia Subsystem, IMS) voice call service. The AF network element includes an AF network element (to be specific, an AF network element of an operator) in a core network and a third-party AF network element (for example, an application server of an enterprise).

The PCF network element includes policy control functions such as being responsible for charging at a session or business flow level, QoS bandwidth assurance and mobility management, and terminal policy decision. The PCF network element includes an access and mobility management policy control function (access and mobility management policy control function, AM PCF) network element and a session management policy control function (session management PCF, SM PCF) network element. The AM PCF network element is configured to formulate an AM policy for a terminal, and the AM PCF network element may alternatively be referred to as a policy control function network element that provides a service for a terminal (PCF for UE). The SM PCF network element is configured to formulate a session management policy (session management policy, SM policy) for a session. The SM PCF network element may alternatively be referred to as a policy control function network element that serves a session (PCF for a PDU session).

The NRF network element may be configured to provide a network element discovery function, and provide, based on a request of another network element, network element information corresponding to a network element type. The NRF further provides network element management services, such as network element registration, update, and de-registration, and network element status subscription and push.

The BSF network element provides functions such as registration/de-registration/update of a BSF service, NRF connection detection, session binding information creation, UE information obtaining, and session binding information query for duplicate IP addresses.

The AUSF network element is responsible for performing authentication on a user, to determine whether the user or a device is allowed to access the network.

The DN is a network located outside the operator network. A plurality of DNs can access the operator network, and a plurality of services can be deployed on the DN, to provide services such as data and/or voice for a terminal. For example, the DN is a private network of an intelligent factory, a sensor installed in a workshop of the intelligent factory may be the terminal, a control server of the sensor is deployed in the DN, and the control server can provide a service for the sensor. The sensor may communicate with the control server to obtain instructions of the control server, transmit collected sensor data to the control server based on the instructions, and the like. For another example, the DN is an internal office network of a company, a mobile phone or a computer of an employee in the company may be the terminal, and the mobile phone or the computer of the employee can access information, a data resource, or the like on the internal office network of the company.

In FIG. 1, Npcf, Nurf, Nudm, Naf, Namf, and Nsmf are service-based interfaces provided by the PCF, the UDR, the UDM, the AF, the AMF, and the SMF, respectively, and are configured to invoke corresponding service-based operations. N1, N2, N3, N4, and N6 are interface sequence numbers. Meanings of these interface sequence numbers are as follows:
(1) N1 is an interface between the AMF and the terminal, and may be configured to transfer non-access stratum (non-access stratum, NAS) signaling (for example, including a QoS rule from the AMF) and the like to the terminal.
(2) N2 is an interface between the AMF and the access network device, and may be configured to transfer radio bearer control information from a core network side to the access network device, and the like.
(3) N3 is an interface between the access network device and the UPF, and may mainly be configured to transfer uplink and downlink user plane data between the access network device and the UPF.
(4) N4 is an interface between the SMF and the UPF, and may be configured to transfer information between a control plane and a user plane, including delivery of a forwarding rule, a QoS rule, a data statistics rule, and the like from the control plane to the user plane, and reporting of user plane information.
(5) N6 is an interface between the UPF and the DN, and is configured to transfer uplink and downlink user data flows between the UPF and the DN.

FIG. 2 is a diagram of a 5G network architecture based on a point-to-point interface. For descriptions of functions of network elements, refer to the descriptions of the functions of the corresponding network elements in FIG. 2. Details are not described again. A main difference between FIG. 2 and FIG. 1 lies in that an interface between control plane network elements in FIG. 1 is a service-oriented interface, and an interface between control plane network elements in FIG. 2 is a point-to-point interface.

In the architecture shown in FIG. 2, names and functions of the interfaces between the network elements are as follows:
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver a protocol data unit (protocol data unit, PDU) session granularity control policy and a service data flow granularity control policy.
(4) N8 is an interface between the AMF network element and the UDM network element, and may be used by the AMF network element to obtain subscription data and authentication data related to access and mobility management from the UDM network element, used by the AMF network element to register information related to terminal mobility management with the UDM network element, and the like.
(5) N9 is a user plane interface between the UPF network element and the UPF network element, and is configured to transfer uplink and downlink user data flows between UPF network elements.
(6) N10 is an interface between the SMF network element and the UDM network element, and may be used by the SMF network element to obtain subscription data related to session management from the UDM network element, used by the SMF network element to register information related to a terminal session with the UDM network element, and the like.
(7) N11 is an interface between the SMF network element and the AMF network element, and may be configured to transfer PDU session tunnel information between the access network device and the UPF, transfer a control message sent to the terminal, transfer radio resource control information sent to the access network device, and the like.
(8) N15 represents an interface between the PCF network element and the AMF network element, which may be configured to deliver a terminal policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the foregoing network element or function may be implemented by one device, may be jointly implemented by a plurality of devices, or may be implemented by one functional module in one device. This is not specifically limited in embodiments of this application.

The user plane network element, the session management network element, and the mobility management network element in this application may be respectively a UPF network element, an SMF network element, and an AMF network element in a 5G system, or may be network elements that have functions of the UPF network element, the SMF network element, and the AMF network element in a future communication network such as a 6th (the 6th generation, 6G) network. This is not limited in this application. In embodiments of this application, an example in which the UPF network element, the SMF network element, and the AMF network element are respectively a user plane network element, a session management network element, and a mobility management network element is used for descriptions. In addition, the UPF network element, the SMF network element, and the AMF network element are respectively referred to as a UPF, an SMF, and an AMF for short.

For ease of descriptions, in embodiments of this application, a base station (for example, an eNB in 4th (the 4th generation, 4G), a gNB in 5G, or a base station in future communication) is used as an example of the access network device for description, and a "base station" that appears subsequently may be replaced with an "access network device". In embodiments of this application, UE is used as an example of a terminal for descriptions, and "UE" that appears subsequently may be replaced with a "terminal".

It may be understood that the core network may further include another network function entity. This is not limited in this application.

The technical solutions provided in embodiments of this application may be applied to various communication systems. For example, the technical solutions may be applied to a 5G system, or may be applied to another future-oriented new system, for example, a 6G system. This is not limited in embodiments of this application. In addition, the terms "system" and "network" are interchangeable.

For ease of understanding of embodiments of this application, several basic concepts in embodiments of this application are briefly described.
1. P-IoT: To be specific, some network nodes may be passive, semi-passive, semi-active, or active, and obtain energy through solar energy, radio frequency, wind energy, water energy, tidal energy, or the like. A manner of obtaining energy is not specifically limited in this application. These nodes are not equipped with or do not depend on power supply devices such as batteries, but perform energy harvesting from an environment, to support data sensing, transmission, and distributed computing. These network nodes may further store harvested energy. The passive internet of things architecture may include a terminal, a reader (reader, or may be referred to as a reader/writer), and a server. The passive terminal may be in a tag form, or may be in any other terminal form, which is not limited. The terminal may be passive, semi-passive, semi-active, or active. The terminal may not have an energy storage capability (for example, not have a capacitor), or may have an energy storage capability (for example, have a capacitor to store electric energy). The reader may be an access network device, for example, a base station, a pole station, a micro base station, or a macro base station. Alternatively, the reader may be a terminal, for example, a mobile phone, an IoT device, or a handheld reader/writer. Herein, an example in which the terminal is a tag is used for description, but the terminal is not limited to the tag. The reader (reader) performs non-contact bidirectional data communication through radio frequency and reads or writes an electronic tag or a radio frequency card (Tag) through radio frequency, to identify a target and exchange data. One is that when entering an effective identification range of the reader, the tag receives a radio frequency signal sent by the reader, and sends, by using energy obtained through an induction current, information (corresponding to the passive tag) stored in a chip. The other is that the tag may store part of electric energy through solar energy, so that the tag can actively send a signal of a specific frequency (in this case, the tag may also be referred to as a semi-passive or semi-active tag). The reader receives and decodes the information, and sends the information to a central information system for related data processing.

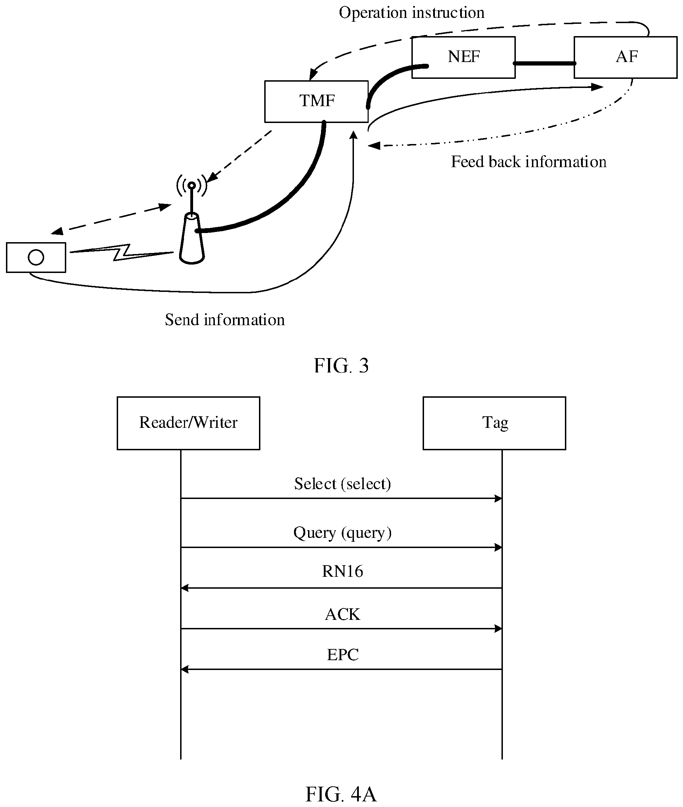

FIG. 3 is a diagram of a passive internet of things service. In FIG. 3, an example in which a reader is a base station (a pole station or a macro base station) is used for description. However, a device form of the reader is not limited in this application.

When performing an operation on a tag, a server may send an operation instruction to a core network (for example, a tag management function TMF, where the TMF may be integrated with a core network device, an access network device, or an application function, or may be an independent core network device). The operation instruction may include a counting operation (or referred to as an inventory operation) (which may also be understood as obtaining an identifier of the tag, and each tag has an identifier thereof. The identifier of the tag may be assigned by an enterprise (to be specific, written into the tag when the enterprise prints the tag), or may be assigned by an operator. In a possible implementation, the identifier of the tag may be a globally unique code, for example, an electronic product code (electronic product code, EPC), or may be a temporary identifier or a non-globally unique identifier. In a counting procedure, the server may deliver a counting instruction. Usually, the counting instruction includes information such as an identification range of the tag, an identifier of the reader, and location information. After receiving the counting instruction, the reader performs counting on the tag according to the counting instruction, and sends the identifier of the tag to the server. Alternatively, the server sends an instruction, and the reader forwards the instruction to the tag. The tag learns, based on content of the instruction, that an operation is a counting operation. The tag sends an identifier of the tag to the reader, and the reader sends the identifier of the tag to the server; or the tag sends an identifier of the tag to the core network through the reader, and the core network sends the identifier of the tag to the server), a read operation (to be specific, performing data reading on the tag, where the tag may have a storage function, and a storage area of the tag may store data. If the server intends to perform a read operation on the tag, the server sends a read instruction, and the reader or the core network performs the read operation on the tag according to the instruction, reads the data from the storage area of the tag, and sends the data to the server), a write operation (to be specific, performing data writing on the tag, where the server may send a write instruction, and the reader or the core network performs a write operation on the tag according to the instruction, to write data into the storage area of the tag), a disable operation (to be specific, invalidating or disabling the tag, where the server may send a disable instruction, where the disable instruction may include a tag identifier (to be specific, an identifier of a tag that is expected to be disabled or invalidated). The reader or the core network performs an invalidation operation on the tag according to the instruction. After the operation is completed, the tag is invalidated or disabled, and counting or another operation cannot be performed on the tag), tag information obtaining (which may be understood as a top description of the foregoing operations (for example, a top description of the counting operation and the read operation), and whether the server is a counting tag or reads tag data is not distinguished. The operation obtains the tag information, and the tag information may be an identifier of the tag or information stored in a tag storage area), and an operation of exchanging information with the tag (which may be understood as a top description of the foregoing operations. After receiving an instruction sent by the server, the reader performs information or message exchange with the tag, and sends information from the tag to the server. This operation is mainly for a case in which the reader does not view instruction content, and is only responsible for forwarding a message sent by the server to the tag and a message sent by the tag to the server. Therefore, in this scenario, the operation performed by the reader on the tag may be understood as an operation of performing message exchange with the terminal). The instruction may include area location information, the identifier of the tag, and the like. The base station sends an access instruction to the tag. After random access of the tag succeeds, the base station sends an instruction to the tag (the base station may forward, to the tag, an instruction sent by the core network). The tag obtains or sends the corresponding information according to the instruction. For example, when the instruction is a counting instruction or to perform a counting operation, the tag sends the identifier of the tag; when the instruction is a read instruction or to perform a read operation, the tag sends data information stored in the storage area of the tag; and when the instruction is a write instruction or to perform a write operation, the tag stores, in the storage area of the tag, the data information that is to be written into the tag and that is included in the instruction. The base station sends (or forwards), to the core network, information sent by the tag, and the core network sends the information to the server. The core network performs an access management operation on the tag based on feedback information of the server.

A manner of sending the instruction by the server may be sending through a control plane channel. As shown in FIG. 3, the server sends an instruction to a tag management function or a passive internet of things function. In this case, the server may be an application function (application function, AF), an application server (application server, AS), or a passive internet of things application function (P-IoT AF). In a possible implementation, the P-IoT AF sends an instruction to the tag management function or the passive internet of things function. In another possible implementation, the P-IoT AF sends an instruction to the tag management function or the passive internet of things function via a control plane device. The control plane device may be an NEF, an SMF, a PCF, a UDM, a network slice-specific and SNPN (standalone non-public network) authentication and authorization function (network slice-specific and SNPN authentication and authorization function, NSSAAF), or an AMF. In addition, the server may further send an instruction to the reader through a user plane channel. In a possible implementation, the server sends an instruction to the base station via the UPF. In a possible implementation, the server sends an instruction to the tag management function or the passive internet of things function via a user plane device (UPF) and the SMF, and the tag management function or the passive internet of things function sends the instruction to the tag via a RAN. In another possible implementation, the server sends an instruction to the reader via a user plane device and an access network device, for example, a RAN (when the reader is a terminal). In a possible implementation, the tag management function or the passive internet of things function may be deployed together with or co-deployed with the core network device, the access network device, or the application function. When two devices or functions are co-deployed, interaction between the two functions or devices provided in embodiments of this application becomes an internal operation of an integrated function or device or may be omitted.

### 2. Tag-based random access procedure

In a tag counting procedure, a tag needs to perform random access (step 1 to step 4) in FIG. 4A, and send an EPC code to a reader/writer after the random access succeeds, so that the reader/writer can learn which tags are within coverage of the reader/writer. The information is finally reported by the reader/writer to middleware and a server. A read/write procedure is generally as follows:
Step 1: The reader/writer receives a counting command delivered by the server (the counting command may be delivered by the server to the middleware, and then delivered by the middleware to the reader/writer), generates a Select command, where the command carries a tag range (for example, EPC codes of some specific ranges), and delivers the Select command. After listening to the Select command, the tag determines whether the tag belongs to the tag range that needs to be determined in the Select command. If the tag belongs to the tag range, the tag feeds back information after receiving a Query command subsequently. If the tag does not belong to the tag range, no action is performed subsequently.
Step 2: The reader/writer sends a Query command. The Query command may include a value (denoted as a Q value). The tag generates a random number based on the Q value, for example, generates a random number between 0 to the Q^{th} power of 2. Then, the tag subtracts 1 from the random number each time the reader/writer sends a Query or QueryRep instruction. When the random number is reduced to zero, the tag initiates random access.
Step 3: When the tag finds that the tag itself belongs to the tag range selected in the Select command, the tag feeds back a random number RN16 (which may be understood as a random number with a length of 16 bits) to the reader/writer in a contention manner (for example, sending a random number RN16 to the reader/writer when the random number is reduced to zero in step 2).
Step 4: After receiving the random number sent by the tag, the reader/writer sends an ACK command, where the command includes the received random number (RN16).
Step 5: After receiving the ACK command sent by the reader and verifying that the random number is correct, the tag feeds back an EPC code of the tag to the reader/writer, to complete the counting procedure.

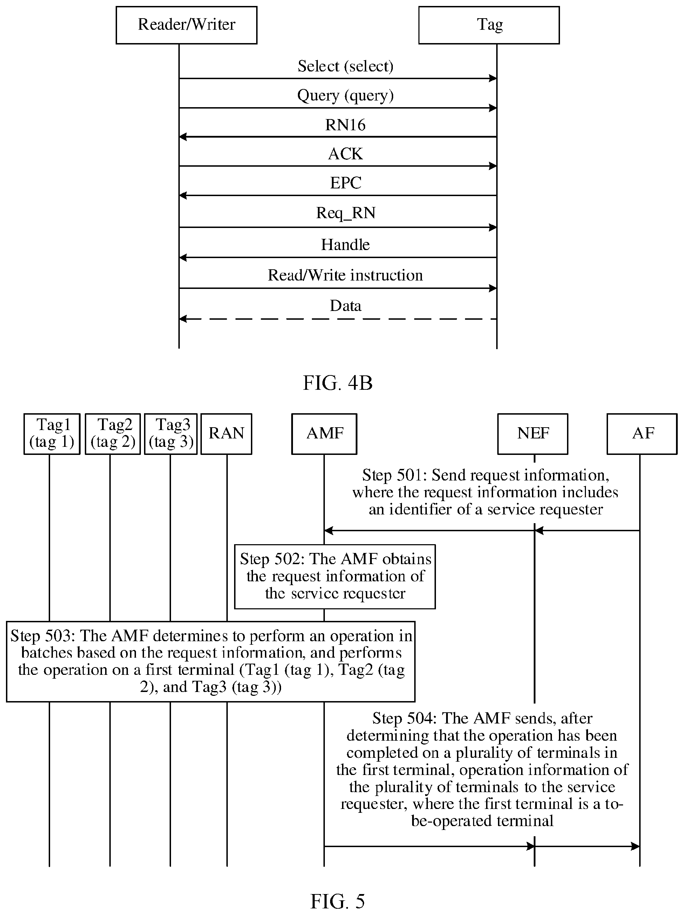

For a tag read/write procedure, in the read/write procedure, the reader/writer sets the tag range in the Select command as a range of tags on which reading/writing needs to be performed(for example, if the range in the Select command is a specific EPC code, the reader/writer performs a read/write operation on the tag corresponding to the EPC code). Step 1 to step 5 in FIG. 4B are a counting procedure, but the counting procedure is not a counting procedure of a group of tags, but counting performed on a specific tag. A procedure from step 6 is the read/write procedure, which is generally as follows:
Step 6: The reader/writer sends a Req_RN command to the tag, where the Req_RN command carries the previously received random number RN16.
Step 7: If the tag verifies that the random number is correct, the tag sends a handle to the reader/writer. The handle needs to be carried in the subsequent read/write procedure.
Step 8: The reader/writer sends a read or write command to the tag, where the command needs to carry the handle. If the read or write command is a write instruction, data to be written into the storage area of the tag further needs to be carried.
Step 9: If the command in step 8 is a read instruction, the tag needs to feed back data that is in the storage area of the tag, and further needs to carry the handle.

It should be noted that, a disable procedure of the tag is similar to this. In step 8, the tag performs disabling after receiving a disable instruction, and then optionally feeds back a handle in step 9.

As described in the background, in the passive IoT, a tag may not be frequently operated for a plurality of times within a period of time. If statistics results are stored or forwarded after statistics collection is performed for a plurality of times, a service requirement in the passive IoT cannot be met, and this method is not applicable to the passive IoT. In addition, when a reader/writer is implemented as a base station, the base station needs to be prevented from sensing specific user information, regardless of tag information or information about an operation performed on the tag, to ensure information security. Therefore, a new tag batch operation method is urgently needed, to meet a requirement of the passive IoT and requirements of other 5G IoT technologies, such as massive IoT (massive internet of things), narrowband IoT (narrowband internet of things), critical IoT (critical internet of things), and industrial IoT (industrial internet of things).

This application provides a communication method. As shown in FIG. 5, the method may be performed by an access network device, may be performed by a core network device, or may be performed through interaction between an access network device, a core network device, and a service requester. The access network device may be a RAN, a reception point (transmission reception point, TRP), a gNB, a chip, or the like. The core network device may be an AMF, an SMF, a TMF, or the like. The service requester may be an AF or the like. This is not specifically limited in this application. In FIG. 5, terminals being Tag1, Tag2, and Tag3 (only three terminals are used as an example for description herein, however, a quantity of terminals is not limited in actual application. Before the solution of this application is executed, a tag printer (Tag Printer) writes tag identifiers into Tag1, Tag2, and Tag3 in advance), an access network device being a RAN, a core network device being an AMF, a service requester being an AF, and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMF 1, and a core network device that serves a terminal in area 2 of enterprise A is AMF2) that serve a specific service requester and a plurality of access network devices. In addition, in some scenarios, an access procedure or an operation may be performed on a tag by using a terminal. In this case, the reader/writer may alternatively be presented as a terminal. This case is also applicable to the solution of this application, and is not specifically limited herein. Details are as follows:
Step 502: The AMF obtains request information of a service requester, where the request information includes an identifier of the service requester (AF ID).

Optionally, the AF may send the request information to the AMF via the NEF, or the AMF obtains the request information of the service requester from another core network device. For example, AMF1 is currently located in core network 1, and AMF1 may perform data exchange with AMF2 in core network 2 to obtain third-party information. Certainly, the AMF may further query a UDM for stored request information. This is not specifically limited in this application. The service requester may be understood as a user, an enterprise, an individual, an operation requester, or the like. This is not specifically limited in this application. In FIG. 5, step 501 in which the AF sends the request information to the AMF via the NEF to enable the AMF to obtain the request information of the service requester is used as an example. In this application, the request information is used as an example for description. However, in actual application, the request information may also be referred to as a service request, operation request information, or the like. A type or a name of a message for sending the request information is not limited in this application.

Optionally, the identifier of the service requester is indicated by at least one of the following information:
the identifier of the service requester, an application function identifier corresponding to the service requester, address information corresponding to the service requester, and port information corresponding to the service requester.

The identifier of the service requester may be globally unique identification information of the service requester, globally unique identification information of an operator, or an application function identifier, for example, an AF ID, corresponding to the service requester. In a possible implementation, the address information or the port information of the request information may be port information or address information corresponding to the service requester. In a possible implementation, the address information may include an IP address (for example, an IPv4 address, an IPv6 address, or an IPv6 prefix) or a MAC address (media access control address). The port number information may include a transmission control protocol (transmission control protocol, TCP) port number or a user datagram protocol (user datagram protocol, UDP) port number. The AMF may learn of the corresponding identifier of the service requester by parsing an address of the request information.

Step 503: The AMF determines, based on the request information, to perform an operation in batches, and performs the operation on a first terminal, where the first terminal is a to-be-operated terminal.

That the core network device determines, based on the request information, to perform the operation in batches may be understood as that the core network device directly determines, based on specific content of the request information, whether to perform the operation in batches, or may be understood as that the core network device presets a determining policy, and determines, based on a content retrieval determining policy of the request information after receiving the request information, whether to perform the operation in batches. This is not specifically limited in this application. A quantity of first terminals and a quantity of the plurality of terminals vary according to actual scenarios. In actual application, the first terminal may be understood as a subscribed terminal of the service requester. For example, the service requester is enterprise A, and the first terminal may be a subscribed terminal of enterprise A, a subscribed terminal of enterprise A in a specific area, or a subscribed terminal of enterprise A in a specific period. Alternatively, the first terminal may be understood as a terminal that is connected to the service requester in a specific access mode and that is managed by the service requester, for example, a plurality of cars parking in an underground parking lot or a plurality of water meters in a residential quarter. This is not specifically limited in this application.

Optionally, the request information further includes at least one of the following:
a first geographical area in which the first terminal is located, an identifier of the first terminal, and operation type indication information.

The first geographical area in which the first terminal is located may be understood as address information (longitude information, latitude information, coordinate value information, a TAI, a cell ID, and the like) that is for providing a service for the first terminal. For example, the first geographical area is 115° east longitude to 20° west longitude, 10° north latitude to 30° north latitude, or the first geographical area is a campus of a Shanghai branch of Company A. In the first geographical area, not only the subscribed terminal of the service requester may exist, but also other terminals may exist. For example, the service requester is enterprise A, and the subscribed terminal of enterprise A may exist in the first geographical area, and a subscribed terminal of enterprise B may also exist in the first geographical area. The first geographical area is merely described herein as an example, and the first geographical area is not specifically limited.

The identifier of the first terminal may be understood as an identifier of a terminal (for example, a tag) that the service requester expects to operate. This is not specifically limited in this application.

The operation type indication information may be understood as indication information of an operation such as inventory (which may also be referred to as counting), read, write, or disable. A specific operation type may be inventorying a terminal, reading data in a storage area of a terminal, writing data into a storage area of a terminal, or disabling a terminal. This is not specifically limited in this application.

In this application, the request information includes the foregoing plurality of types, so that the core network device can better determine whether the operation needs to be performed in batches and how to specifically perform the operation in batches.

When the information included in the request information is different, the AMF may determine, based on different cases, to perform the operation in batches. Details are as follows:
Situation 1: The request information includes only the identifier (AF ID) of the service requester.

After receiving the request information, the AMF finds that only the AF ID is included, and determines, based on the AF ID, to perform the operation in batches, where the first terminal is a subscribed terminal of the service requester. When the request information includes only the identifier of the service requester, the batch operation is directly performed on a terminal, so that the step of determining the batch operation can be reduced, and data processing efficiency can be improved.

Situation 2: The request information is the identifier (AF ID) of the service requester and the first geographical area.

After receiving the request information, the AMF finds that the request information includes the AF ID and the first geographical area, and the AMF may determine to perform the operation in batches, where the first terminal is a subscribed terminal that is of a service requester and that is covered by the first geographical area. For example, the AMF receives AF1 + geographical area A, and determines that a batch operation needs to be performed on subscribed terminals of a service requester in geographical area A.

In this application, when the request information includes the identifier of the service requester and the first geographical area, the batch operation is directly performed on a terminal, so that the step of determining the batch operation can be reduced, and data processing efficiency can be improved.

Situation 3: The request information is the identifier (AF ID) of the service requester and the identifier of the first terminal.

If a quantity of identifiers of first terminals is greater than 1, the AMF determines, based on the identifiers of the first terminals, to perform the operation in batches. For example, the AMF receives AF1 + terminal identifier 1. Because the request information includes only one terminal identifier, the AMF does not perform the operation in batches. If the AMF receives AF1 + terminal identifier 1, terminal identifier 2, terminal identifier 5, and terminal identifier 9, because the request information includes a plurality of terminal identifiers, the AMF needs to perform the operation in batches.

Situation 4: The request information is the identifier (AF ID) of the service requester and the operation type indication information.

After receiving the AF ID, the AMF determines, based on the AF ID, to perform the operation in batches. For example, if the AMF receives AF1 and receives the operation type indication information, and determines that AF1 corresponds to a batch operation, the AMF determines that an operation corresponding to the operation type indication information needs to be performed on a subscribed terminal of a service requester corresponding to AF1. If AF2 in an operation rule does not correspond to a batch operation, the AMF determines that no operation needs to be performed on a subscribed terminal of a service requester corresponding to AF2.

Situation 5: The request information is the identifier (AF ID) of the service requester, the first geographical area, and the identifier of the first terminal.

When the request information is the identifier (AF ID) of the service requester, the first geographical area, and the identifier of the first terminal, if a quantity of identifiers of first terminals is greater than 1, the AMF determines, based on the identifiers of the first terminals, to perform the operation in batches.

Situation 6: The request information is the identifier (AF ID) of the service requester, the first geographical area, and the operation type indication information.

When the request information is the identifier (AF ID) of the service requester, the first geographical area, and the operation type indication information, the AMF may determine, based on the first geographical area, to perform, in batches, an operation corresponding to the operation type indication information. For example, in Table 1, that the first geographical area is an address of an access network device RAN that provides a service for the first terminal is used as an example for illustration. A disable operation is performed on a subscribed terminal of AF1 with an address of longitude A1 and latitude B1, and a write operation is performed on a subscribed terminal of AF2 with an address of longitude A2 and latitude B2. In addition, the AMF may further obtain, via an LMF, the address of the access network device that provides a service for the first terminal. How to obtain the address of the access network device that provides a service for the first terminal is not specifically limited in this application.

**Table 1**

| First geographical area | Operation type indication information | AF identifier |
|---|---|---|
| Longitude A1 and latitude B1 | Disable | AF1 |
| Longitude A2 and latitude B2 | Write | AF2 |
| ... | ... | ... |

In this application, when the request information includes the identifier of the service requester, the first geographical area in which the first terminal is located, and the operation type indication information, the batch operation is directly performed on a terminal, so that the step of determining the batch operation can be reduced, and data processing efficiency can be improved.

Situation 7: The request information is the identifier (AF ID) of the service requester, the identifier of the first terminal, and the operation type indication information corresponding to the first terminal, and the same operation type indication information corresponds to identifiers of a plurality of terminals in the first terminal.

If a quantity of identifiers of first terminals is greater than 1, and same operation type indication information corresponds to identifiers of a plurality of different first terminals, the AMF determines to perform the operation in batches. For example, the AMF receives AF1 + terminal identifier 1 + inventory, terminal identifier 2 + read data, terminal identifier 3 + write data, and terminal identifier 5 + disable. Because operation types corresponding to terminal identifiers are different, the AMF does not perform the operation in batches. If the AMF receives AF1 + terminal identifier 1 + inventory, terminal identifier 2 + inventory, terminal identifier 5 + read data, and terminal identifier 9 + write data, because the request information includes only a plurality of terminal identifiers, and at least two terminal identifiers correspond to different operation types, the AMF needs to perform the operation in batches.

For example, as shown in the following Table 2, an example in which the first terminal is the subscribed terminal of the service requester is used for description in Table 2. An inventory operation is performed on a terminal whose terminal identifier is greater than 100 or less than 200 in subscribed terminals of AF1, and a disable operation is performed on a terminal whose terminal identifier is less than 50 in the subscribed terminals of AF1.

In another possible case, a terminal identifier range in the request information includes terminal identifiers of other enterprises (for example, AF2). In this case, the core network device queries, based on the identifier of the service requester, an identifier list that is in the subscription data or prestored in the core network device and that is of subscribed terminals of the service requester, and selects an intersection of the terminal identifier range in the request information and the identifier list as the identifier of the first terminal.

**Table 2**

| Identifier range of the first terminal | Operation type indication information | AF identifier |
|---|---|---|
| >100 and <200 | Inventory | AF1 |
| <50 | Disable | AF1 |
| ... | ... | ... |

For example, as shown in the following Table 3, an inventory operation is performed on terminals whose terminal identifiers are 00000000 and 00000001 in the subscribed terminals of AF1, a disable operation is performed on a terminal whose terminal identifier is 00000010 in the subscribed terminals of AF1, and a read operation is performed on a terminal whose terminal identifier is 00000011 in the subscribed terminals of AF1.

**Table 3**

| Identifier of a first terminal | Operation type indication information | AF identifier |
|---|---|---|
| 0000 0000 | Inventory | AF1 |
| 0000 0001 | Inventory | AF1 |
| 0000 0010 | Disable | AF1 |
| 0000 0011 | Read | AF1 |
| ... | ... | ... |

Situation 8: The request information is the identifier (AF ID) of the service requester, the first geographical area, the identifier of the first terminal, and the operation type indication information.

When the request information is the identifier (AF ID) of the service requester, a second geographical area, the identifier of the first terminal, and the operation type indication information, if a quantity of identifiers of first terminals is greater than 1, and the same operation type indication information corresponds to identifiers of a plurality of terminals in the plurality of first terminals, the AMF determines to perform the operation in batches.

For example, as shown in the following Table 4, an inventory operation is performed on terminals whose identifiers are 00000000 and 00000001 in first ends managed at longitude A1 and latitude B1.

**Table 4**

| Identifier of a first terminal | Operation type indication information | First geographical area | AF identifier |
|---|---|---|---|
| 0000 0000 | Inventory | Longitude A1 and latitude B1 | AF1 |
| 0000 0001 | Inventory | Longitude A2 and latitude B2 | AF1 |
| 0000 0010 | Disable | Longitude A2 and latitude B2 | AF1 |
| 0000 0011 | Read | Longitude A2 and latitude B2 | AF1 |
| ... | ... | ... | ... |

In an optional implementation, the AMF may determine, based on Table 1 to Table 4, whether a same operation, that is, batch management, needs to be performed on the first terminal. For example, in Table 1, the AMF may perform a batch inventory operation on terminals whose identifiers are greater than 100 and less than 200, and perform a batch disable operation on terminals whose identifiers are less than 50. For example, in Table 3, the AMF may perform a batch inventory operation on terminals corresponding to 0000 0000 and 0000 0001.

In actual application, the request information may be any one of the foregoing eight cases, and the core network device may flexibly determine, based on a requirement, a determining operation for performing the operation in batches. This is not specifically limited in this application.

The foregoing is an indication that the request information implicitly includes that the batch operation needs to be performed, that is, determining, based on special information content, that the batch operation needs to be performed. In other words, it is directly determined, based on content in the request information, whether to perform the batch operation. In addition, whether to perform the operation in batches may be indicated in another manner. For example, when receiving identification information of the service requester, the AMF queries a determining policy preset by the AMF or subscription data in the UDM/UDR. If determining, based on the determining policy or the subscription data, that AF1 corresponds to a batch operation, it is determined that the batch operation needs to be performed on a subscribed terminal of a service requester corresponding to AF1. If AF2 does not correspond to a batch operation in the operation rule, it is determined that no batch operation needs to be performed on a subscribed terminal of a service requester corresponding to AF2.

When the request information is in the foregoing several cases, specific procedures of performing the batch operation on the first terminal are different. Details are specifically as follows:

In the situation 1, the AMF obtains subscription data of the service requester based on the identifier of the service requester, where the subscription data includes: a correspondence between the service requester and an operation type and a correspondence between the service requester and a second geographical area. The AMF performs, based on the subscription data, an operation corresponding to the operation type on a plurality of terminals (namely, first terminals) covered by the second geographical area. As shown in the following Table 5, if subscription data of AF1 includes inventory, longitude A1 to longitude B1, and latitude X1 to latitude Y1, the AMF may determine, based on the subscription data, that an inventory operation needs to be performed on a plurality of terminals at the longitude A1 to the longitude B1 and the latitude X1 to the latitude Y1. If subscription data of AF2 includes read data, longitude A2 to longitude B2, and latitude X2 to latitude Y2, the AMF may determine, based on the subscription data, that a read data operation needs to be performed on a plurality of terminals at the longitude A2 to the longitude B2 and the latitude X2 to the latitude Y2.

**Table 5**

| Identifier of the service requester | Subscription data | |
|---|---|---|
| | Operation type | Second geographical area |
| AF1 | Inventory | Longitude A1 to longitude B1 and latitude X1 to latitude Y1 |
| AF2 | Read data | Longitude A2 to longitude B2 and latitude X2 to latitude Y2 |
| ... | ... | ... |

In the foregoing case, if the request information includes the first geographical area, the AMF only needs to query the subscription data to obtain information about an operation type, and performs an operation of the corresponding operation type on a plurality of terminals covered by the first geographical area, where the first terminal is a subscribed terminal that is of the service requester and that is covered by the second geographical area.

In addition, when the request information includes the first geographical area, and a second geographical area queried by the core network device based on subscription data of the service requester is different from the first geographical area, the first terminal is a terminal covered by an intersection set of the second geographical area and the first geographical area, or a terminal covered by a smaller geographical area in the first geographical area and the second geographical area.

In addition, in the foregoing case, if the request information includes the operation type indication information, the operation type of the operation performed in batches is determined based on the operation type indication information, and the subscription data does not need to be queried.

In addition, the request information may further include a device type (passive, semi-passive, semi-active, or active) of the terminal, so that when different types of first terminals use a same identifier, a specific first terminal on which a management operation is performed is distinguished, and the AMF is notified to perform different operations on different types of devices, for example, receiving different NAS message types.

Step 504: The AMF sends, after determining that the operation has been completed on a plurality of terminals in the first terminal, operation information of the plurality of terminals to the service requester.

If the AMF determines, based on the subscription data of the service requester, that an operation has been performed on Tag1 and Tag2 (namely, first terminals) and Tag1 and Tag2 are subscribed terminals of the service requester, the AMF sends operation information of Tag1 and Tag2 to the service requester. Certainly, in actual application, the operation may also be performed on Tag3, but Tag3 is not a first terminal. Therefore, operation information of Tag3 does not need to be sent to the service requester.

In this application, the AMF identifies terminals to be operated in batches, so that a batch operation can be performed on a plurality of terminals instead of performing a same operation on only one terminal. In this manner, operation signaling exchange can be reduced, and data processing efficiency can be improved.

The following describes how to specifically perform a batch operation in different cases in which the request information includes the first geographical area but does not include the identifier of the first terminal and the request information includes the identifier of the first terminal but does not include the first geographical area.

**Case 1: The request information includes the first geographical area but does not include the identifier of the first terminal.**

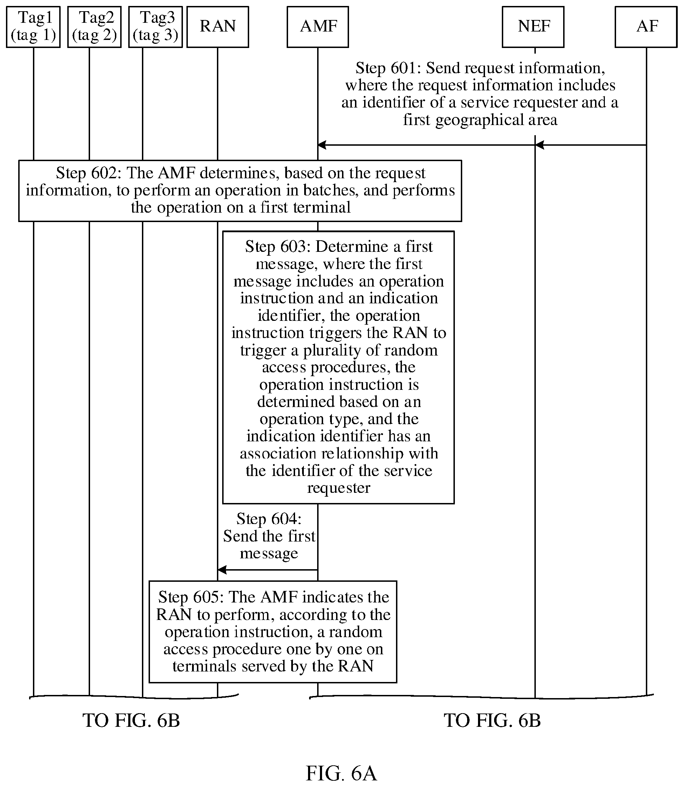

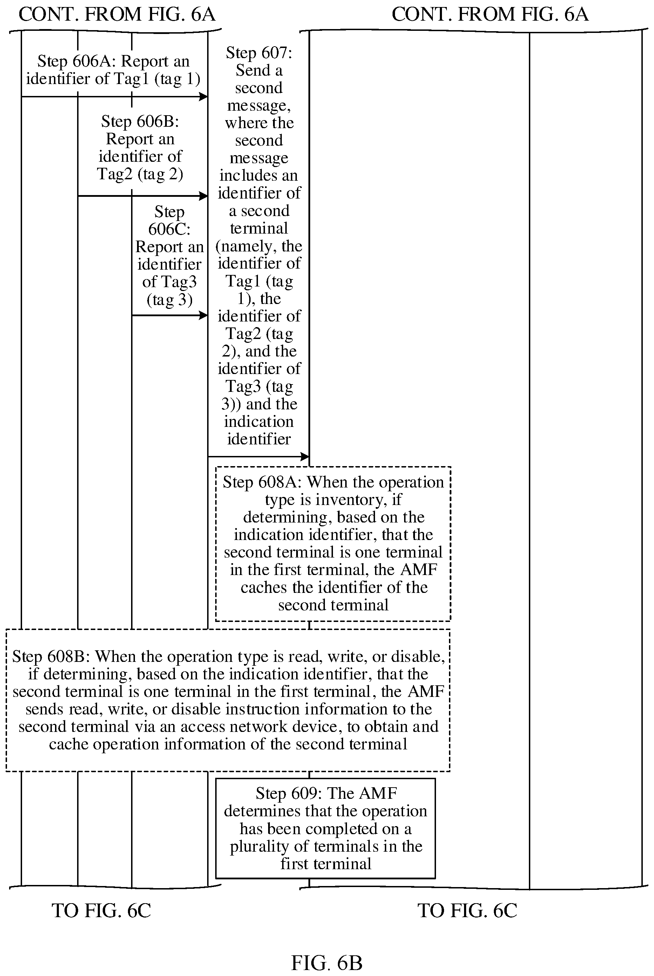

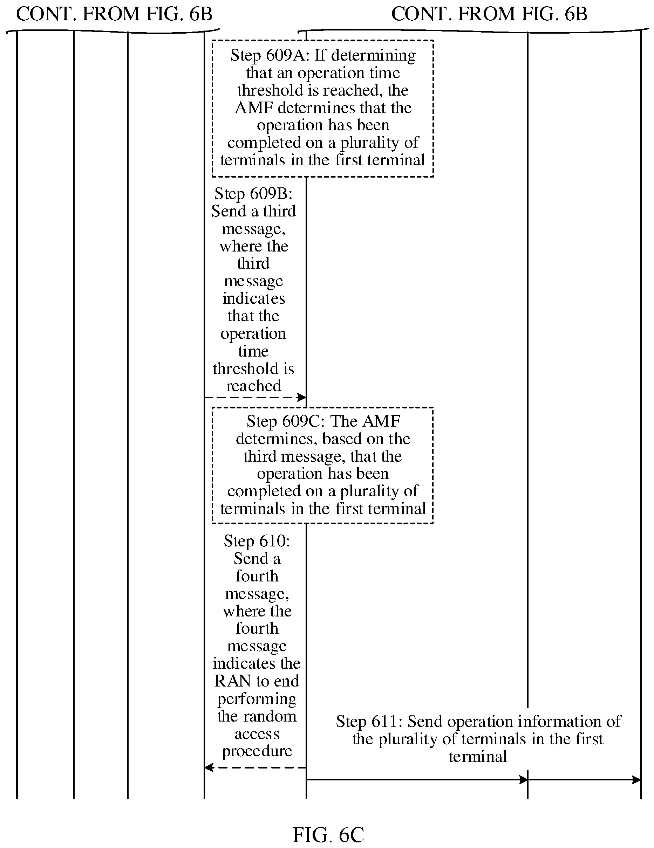

In FIG. 6A to FIG. 6C, terminals being Tag1, Tag2, and Tag3 (only three terminals are used as an example for description herein, but a quantity of terminals is not limited in actual application. Before the solution of this application is executed, a tag printer (Tag Printer) writes tag identifiers into Tag1, Tag2, and Tag3 in advance), an access network device being a RAN, a core network device being an AMF, the service requester being an AF, and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMF1, and a core network device that serves a terminal in area 2 of enterprise A is AMF2) that serve a specific service requester and a plurality of access network devices. Details are as follows:
Step 601: The AF sends request information to the AMF via the NEF, where the request information includes an identifier of a service requester and a first geographical area.
Step 602: The AMF determines, based on the request information, to perform an operation in batches, and performs the operation on a first terminal.

How to determine to perform the operation in batches and how to specifically determine the first terminal and an operation type of the batch operation may be understood with reference to the descriptions of step 503. Details are not described herein again.

The following step 603 to step 608B specifically describe how to perform an operation on the first terminal.

Step 603: The AMF determines a first message, where the first message includes an operation instruction and an indication identifier, the operation instruction triggers the RAN to trigger a plurality of random access procedures, the operation instruction is determined based on an operation type, and the indication identifier has an association relationship with an identifier of a service requester.

In a possible implementation, the operation instruction indicates to perform random access of a next first terminal of any terminal when a preset quantity of times of transparent transmission is reached between the terminal and the access network device. For example, if the operation type is inventory, after the operation instruction indicates that the RAN may perform inventory on a next terminal after performing one transparent transmission operation with a terminal, where the one time of transparent transmission may be understood as step 5 in FIG. 4A. If the operation type of batch management is read, write, and disable, the operation instruction indicates that the RAN may read, write, and disable a next terminal after performing three transparent transmission operations with a terminal, where the three times of transparent transmission may be understood as step 7 to step 9 in FIG. 4B. In this application, after reporting terminal operation information to the core network device, the access network device enters next random access without waiting for an instruction of the core network device for performing the next random access. In this manner, data efficiency can be improved, and exchanged signaling can be reduced.

The indication identifier may be understood as an NGAP identifier. The NGAP identifier is different from an existing NGAP identifier. The NGAP identifier has an association relationship with the identifier of the service requester. When receiving the NGAP identifier, the AMF may obtain identification information of the service requester based on the association relationship. The indication identifier may be for screening a terminal identifier reported by a terminal in a subsequent step, to report operation information of the first terminal to the service requester. For specific descriptions, refer to the following descriptions of 608A and 608B.

In addition, the first message may further include operation mode indication information. For example, if the operation mode indication information is 1, a corresponding operation to be performed is inventory; if the operation mode indication information is 3, a corresponding operation to be performed is read, and the like. This is merely an example for description, and is not specifically limited herein.

Step 604: The AMF sends the first message to the RAN that serves the first terminal.

The RAN is also a RAN that serves a subscribed terminal of a service requester in the first geographical area. In actual application, the RAN may serve terminals of a plurality of service requesters.

Step 605: The AMF indicates the RAN to perform, according to the operation instruction, a random access procedure one by one on terminals served by the RAN.

Step 606A: Tag1 reports an identifier of Tag1 to the RAN.

Step 606B: Tag2 reports an identifier of Tag2 to the RAN.

Step 606C: Tag3 reports an identifier of Tag3 to the RAN.

In an embodiment, when a tag is a passive device, because each access to the AMF is a re-registration process, an identifier of the tag may be sent by using a registration request message, and a tag registration message further needs to be carried. When the tag is a semi-passive device, because a part of information registered previously is reserved when the AMF is accessed, the identifier of the tag may be sent by using a NAS transport message.

It should be noted that, in the foregoing step 606A to step 606C, the RAN may only perform transparent transmission forwarding. Specifically, when a tag performs an inventory operation, after the tag performs one time of transparent transmission, random access may be performed for a next tag, and an identifier reported by the next tag is received. For example, when the inventory operation is performed, it is determined that after Tag1 in step 606A performs one time of transparent transmission, a random access procedure is performed to perform the operation in step 606B; after Tag2 performs one time of transparent transmission, a random access procedure is performed to perform the operation in step 606C. When a tag performs read, write, and disable operations, after the tag performs three times of transparent transmission, if there is no other indication from the AMF, a random access procedure may be performed, and an identifier reported by a next tag is received. For example, when an inventory operation is performed, it is determined that after Tag1 in step 606A performs three times of transparent transmission, the operation of step 606B is performed; after Tag2 performs three times of transparent transmission, the operation in step 606C is performed. Alternatively, after buffering tag identifiers, the RAN may report the buffered identifiers to the AMF after determining that access of all tags is completed (for example, an operation time threshold is reached). It should be noted that the RAN does not sense specific information of the tags, and tag identification information transparently transmitted after the random access procedure is not fixed in a specific sequence, and is only an example herein.

In another possible case, operation information of terminals is temporarily stored in the RAN. After the AMF or the RAN determines that operation life cycles of the terminals end, the RAN uniformly sends the operation information of the terminals to the AMF.

Step 607: The RAN sends a second message to the AMF, where the second message includes an identifier of a second terminal (namely, the identifier of Tag1, the identifier of Tag2, and the identifier of Tag3) and the indication identifier.

Optionally, the RAN may generate another indication identifier based on the indication identifier, and the RAN may send the second message to the AMF. The second message further includes the another indication identifier. The AMF may determine the identifier of the service requester based on an association relationship between the another indication identifier and the indication identifier.

Step 608A: When the operation type is inventory, if determining, based on the indication identifier, that the second terminal is one terminal in the first terminal, the AMF caches the identifier of the second terminal (which belongs to the first terminal and is a subscribed terminal of the service requester).

Step 608B: When the operation type is read, write, or disable, if determining, based on the indication identifier, that the second terminal is one terminal in the first terminal, the AMF sends read, write, or disable instruction information to the second terminal via the access network device, to obtain and cache operation information of the second terminal.

If the second terminal is not one terminal in the first terminal, the RAN is indicated to perform random access on a next tag.

The foregoing steps 608A and 608B may be selectively performed based on an actual operation type. This is not specifically limited in this application. Specifically, the AMF queries, based on the indication identifier (or another indication identifier), an identifier list, prestored in the core network device, of subscribed terminals of the service requester. When determining that the identifier list includes the identifier of the second terminal, the AMF determines that the second terminal is one terminal in the first terminal.

For example, the identifier list of the subscribed terminals corresponding to the indication identifier is shown in the following Table 6. A terminal identifier corresponding to NGAP1 includes an identifier of Tag1 of AF1 and an identifier of Tag2 of AF1; and a terminal identifier corresponding to NGAP2 includes an identifier of Tag4 of AF2 and an identifier of Tag5 of AF2. This is merely an example for description and is not specifically limited herein.

**Table 6**

| Indication identifier | Identifier of a subscribed terminal of a service requester |
|---|---|
| NGAP1 | Identifier of Tag 1 of AF1 and identifier of Tag2 of AF1 |
| NGAP2 | Identifier of Tag4 of AF2 and identifier of Tag5 of AF2 |
| ... | ... |

In the foregoing step 608A, if the indication identifier is NGAP1, it can be learned by querying Table 6 that identifiers of the subscribed terminals of the service requester are the identifier of Tag1 and the identifier of Tag2. In this case, when the second terminal is Tag1 and Tag2, the AMF buffers the identifier of Tag1 and the identifier of Tag2. In the foregoing step 608B, if the indication identifier is NGAP1, it can be learned by querying Table 6 that identifiers of the subscribed terminals of the service requester are the identifier of Tag1 and the identifier of Tag2. In this case, when the second terminal is Tag1 and Tag2, the AMF sends read, write, or disable instruction information to Tag1 and Tag2 to obtain and cache operation information of Tag1 and Tag2. Example descriptions are merely provided herein, and no specific limitation is imposed.

In addition, when the operation type is inventory, the operation information includes an identifier of a first terminal on which the inventory is successfully performed; when the operation type is read, the operation information includes an identifier of a first terminal that is successfully read and read data.

According to an actual service requirement, the core network device may send the operation information of the plurality of terminals on which the operation has been completed, and may also send operation information of a terminal on which the operation has not been completed to the service requester. In addition, the operation information of the terminal on which the operation has been completed and the operation information of the terminal on which the operation has not been completed may be sent together or separately. This is not specifically limited in this application. For example, in the foregoing step 608A, the operation information includes that identifiers of first terminals that are successfully inventoried are the identifier of Tag1 and the identifier of Tag2 and that an identifier of a first terminal that fails to be inventoried is the identifier of Tag3. For example, in the foregoing step 608B, the operation information includes that identifiers of first terminals that are successfully read are the identifier of Tag1 and the identifier of Tag2 and that an identifier of a first terminal that fails to be read is the identifier of Tag3.

In addition, when the operation type is write, information may not be fed back for an identifier of a first terminal that fails to be written, and information may be fed back only for an identifier of a first terminal that is successfully written, or no write result information is fed back. When the operation type is disable, an identifier of a first terminal that is successfully disabled may be incapable of exchanging information with the AMF, and therefore does not feed back information; an identifier of a first terminal that fails to be disabled may be capable of exchanging information with the AMF, and therefore feeds back information. In another case, disable result information may not be fed back. This is not specifically limited in this application.

Step 609: The AMF determines that the operation has been completed on a plurality of terminals in the first terminal.

In an optional implementation, determining may be performed in step 609A. In step 609A, if determining that an operation time threshold is reached, the AMF determines that the operation has been completed on a plurality of terminals in the first terminal. In another optional implementation, the first message further includes an operation time threshold, and determining may be performed in step 609B and step 609C. In step 609B, the AMF receives a third message from the RAN, where the third message indicates that the operation time threshold is reached. In step 609C, the AMF determines, based on the third message, that the operation has been completed on a plurality of terminals in the first terminal.

Step 610: The AMF sends a fourth message to the RAN, where the fourth message indicates the RAN to end performing the random access procedure.

Step 610 is an optional step. In actual application, the AMF may selectively perform this step. Alternatively, the RAN may determine, by itself, that the operation time threshold is reached, and end performing the random access procedure. This is not specifically limited in this application.

Step 611: The AMF sends operation information of the plurality of terminals in the first terminal to the AF.

Then, the AMF may perform an operation procedure on a next batch of terminals.

In this application, a batch operation method is provided in a service scenario of enterprise-to-region inventory. The method includes a trigger condition of a batch operation, a method for determining whether a random access tag meets a requirement, a transparent transmission method of a base station, and the like, to reduce signaling overheads and response time of a terminal, and save energy of the terminal.

**Case 2: The request information includes the identifier of the first terminal, but does not include the first geographical area.**

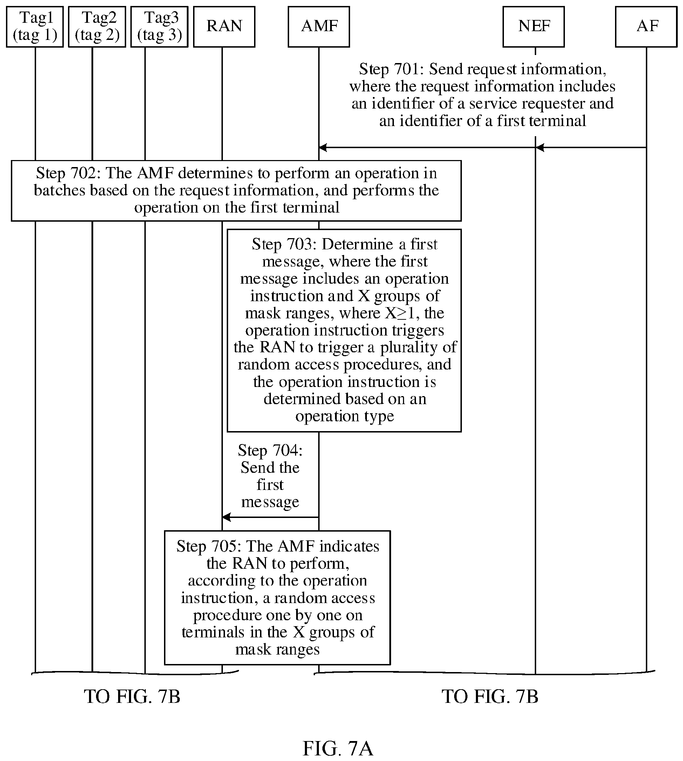

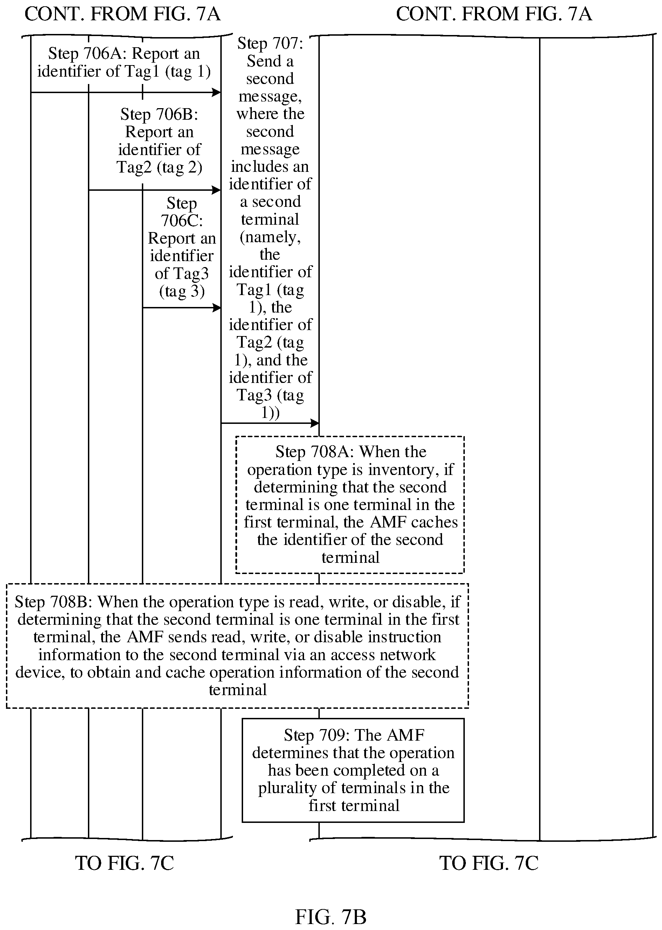

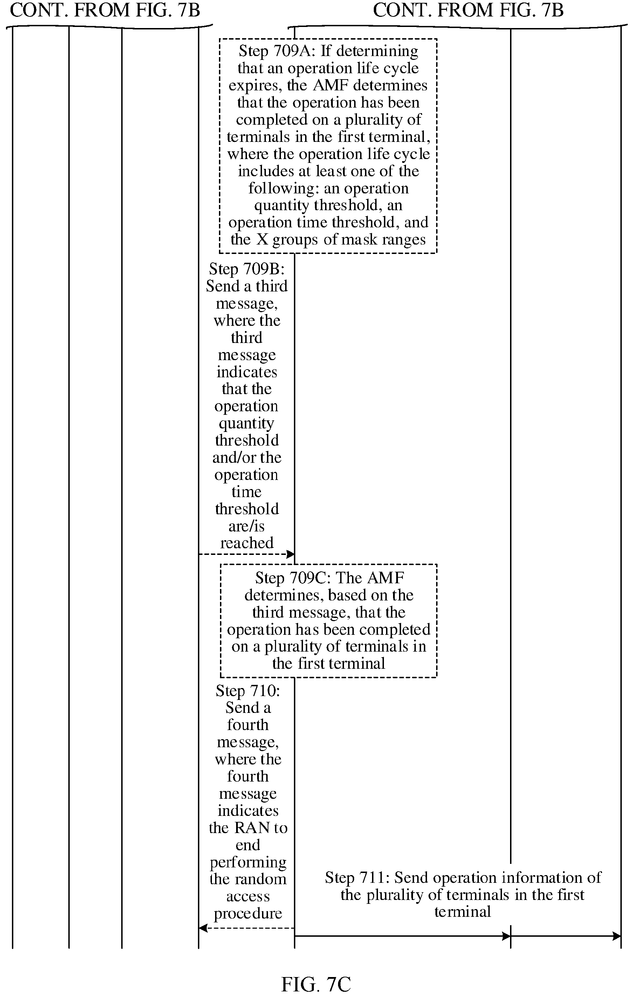

In FIG. 7A to FIG. 6C, terminals being Tag1, Tag2, and Tag3 (only three terminals are used as an example for description herein, but a quantity of terminals is not limited in actual application. Before the solution of this application is executed, a tag printer (Tag Printer) writes tag identifiers into Tag1, Tag2, and Tag3 in advance), an access network device being a RAN, a core network device being an AMF, the service requester being an AF, and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMF1, and a core network device that serves a terminal in area 2 of enterprise A is AMF2) that serve a specific service requester and a plurality of access network devices. Details are as follows:
Step 701: The AF sends request information to the AMF via the NEF, where the request information includes an identifier of a service requester and an identifier of a first terminal.
Step 702: The AMF determines, based on the request information, to perform an operation in batches, and performs the operation on a first terminal.

How to determine to perform the operation in batches and how to specifically determine the first terminal and an operation type of the batch operation may be understood with reference to the descriptions of step 503. Details are not described herein again.

The following step 703 to step 708B specifically describe how to perform an operation on the first terminal.

Step 703: The AMF determines a first message, where the first message includes an operation instruction and X groups of mask ranges, where X≥1, the operation instruction triggers the RAN to trigger a plurality of random access procedures, and the operation instruction is determined based on an operation type.

The operation instruction may be understood with reference to step 603, and details are not described herein again.

Each group of mask ranges corresponds to identifiers of first terminals on which a same type of operation is performed. The mask range is mainly for preventing the RAN from directly identifying an identifier of a terminal to ensure security of information exchange. In addition, the RAN may be indicated to perform an operation on a tag within a specific range in a subsequent operation. The mask range is determined based on the identifier of the first terminal. For example, a mask range corresponding to an identifier of a terminal whose identifier is greater than 100 and less than 200 in Table 2 is 0000 0XXX, and another group of mask ranges 0000 00XX is constructed for an identifier of a terminal whose identifier is less than 50 in Table 2. This is merely an example for description, and a form of the mask range is not specifically limited herein. In addition, after the AMF determines the mask range, in a subsequent step, if the identifier of the first terminal that currently performs random access is an identifier of the last first terminal corresponding to the X^{th} group of mask ranges, the AMF determines that the batch operation is completed on all first terminals.

Step 704: The AMF sends the first message to the RAN that serves the first terminal.

Step 705: The AMF indicates the RAN to perform, according to the operation instruction, a random access procedure one by one on terminals in the X groups of mask ranges.

Step 706A: Tag1 reports an identifier of Tag1 to the RAN.

Step 706B: Tag2 reports an identifier of Tag2 to the RAN.

Step 706C: Tag3 reports an identifier of Tag3 to the RAN.

It should be noted that, in the foregoing step 706A to step 706C, the RAN may only perform transparent transmission forwarding. Specifically, when a tag performs an inventory operation, after the tag performs one time of transparent transmission, random access may be performed for a next tag, and an identifier reported by the next tag is received. For example, when the inventory operation is performed, it is determined that after Tag1 in step 706A performs one time of transparent transmission, a random access procedure is performed to perform the operation in step 706B; after Tag2 performs one time of transparent transmission, a random access procedure is performed to perform the operation in step 706C. When a tag performs read, write, and disable operations, after the tag performs three times of transparent transmission, if there is no other indication from the AMF, a random access procedure may be performed, and an identifier reported by a next tag is received. For example, when an inventory operation is performed, it is determined that after Tag1 in step 706A performs three times of transparent transmission, the operation of step 706B is performed; after Tag2 performs three times of transparent transmission, the operation in step 706C is performed. Alternatively, after buffering tag identifiers, the RAN may report the buffered identifiers to the AMF after determining that access of all tags is completed (for example, an operation time threshold is reached). It should be noted that the RAN does not sense specific information of the tags, and tag identification information transparently transmitted after the random access procedure is not fixed in a specific sequence, and is only an example herein.

In another possible case, operation information of terminals is temporarily stored in the RAN. After the AMF or the RAN determines that operation life cycles of the terminals end, the RAN uniformly sends the operation information of the terminals to the AMF.

Step 707: The RAN sends a second message to the AMF, where the second message includes an identifier of a second terminal (namely, the identifier of Tag1, the identifier of Tag2, and the identifier of Tag3).

Step 708A: When the operation type is inventory, if determining that the second terminal is one terminal in the first terminal, the AMF caches the identifier of the second terminal.

Step 708B: When the operation type is read, write, or disable, if determining that the second terminal is one terminal in the first terminal, the AMF sends read, write, or disable instruction information to the second terminal via the access network device, to obtain and cache operation information of the second terminal.

If the second terminal is not one terminal in the first terminal, the RAN is indicated to perform random access on a next tag.

The foregoing steps 708A and 708B may be selectively performed based on an actual operation type. This is not specifically limited in this application. Specifically, if the identifier of the first terminal includes the identifier of Tag1, the identifier of Tag2, an identifier of Tag4, an identifier of Tag5, and an identifier of Tag6, and if the identifier of Tag1 and the identifier of Tag2 belong to the identifier of the first terminal, the identifier of Tag1 and the identifier of Tag2 are cached in step 708A. In step 708B, the read, write, or disable instruction information is sent to the identifier of Tag1 and the identifier of Tag2, to obtain and cache the operation information of the second terminal.

In addition, the operation information may be understood with reference to the foregoing descriptions of 608A and 608B, and details are not described herein again.

Step 709: The AMF determines that the operation has been completed on a plurality of terminals in the second terminal.

In an optional implementation, determining may be performed in step 709A. In step 709A, if the AMF determines that an operation life cycle expires, the AMF determines that the batch operation has been performed on the plurality of terminals in the second terminal. The operation life cycle includes at least one of the following: an operation quantity threshold, an operation time threshold, and an X groups of mask ranges. For example, if the operation time threshold is T1, a batch management operation is performed within time T1, and the batch management operation is not performed beyond the time T1. Alternatively, if the operation quantity threshold is Y (mainly an operation quantity threshold determined based on a mask range, for example, if a tag corresponding to a mask range is 10, the operation quantity threshold may be set to 10), a batch management operation is performed within Y times, and the batch management operation is not performed beyond the Y times. It should be noted that, when the time or the quantity of times is counted, a forward counting may be performed, for example, counting from a moment 0 to a moment T1/counting from 0 to Y times, or reverse counting may be performed, for example, counting from a moment T1 to a moment 0/counting from Y times to 0. This is not specifically limited in this application. After the AMF determines the mask range, if the identifier of the first terminal that currently performs random access is an identifier of the last first terminal corresponding to the X^{th} group of mask ranges, the AMF determines that the operation is completed on all first terminals.

In another optional implementation, the first message further includes at least one of the following: an operation quantity threshold and an operation time threshold, which may be determined in step 709B and step 709C. In step 709B, the AMF receives a third message from the RAN, where the third message indicates that the operation quantity threshold and/or the operation time threshold are/is reached. In step 709C, the AMF determines, based on the third message, that the operation has been completed on a plurality of terminals in the first terminal.

Step 710: The AMF sends a fourth message to the RAN, where the fourth message indicates the RAN to end performing the random access procedure.

Step 710 is an optional step. In actual application, the AMF may selectively perform this step, or the RAN may end the random access procedure by itself. This is not specifically limited in this application.

Step 711: The AMF sends operation information of the plurality of terminals in the first terminal to the AF.

Then, the AMF may perform a batch operation procedure on a next batch of terminals.

In this application, the batch operation can be performed on a plurality of terminals, instead of performing a same operation on only one terminal, so that batch management on the terminals can be implemented. In addition, the terminal does not report operation information immediately after completing one time of random access, but reports the operation information after a terminal corresponding to the service requester completes random access. In this manner, operation signaling can be reduced, and data processing efficiency can be improved.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

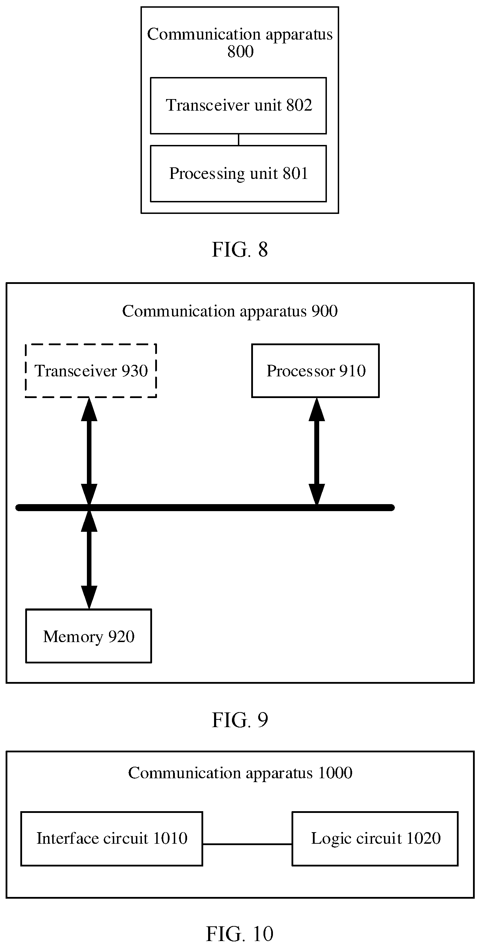

When an integrated unit is used, FIG. 8 is a possible example block diagram of a communication apparatus according to an embodiment of this application. As shown in FIG. 8, the communication apparatus 800 may include a processing unit 801 and a transceiver unit 802. The processing unit 801 is configured to control and manage an action of the communication apparatus 800. The transceiver unit 802 is configured to support communication between the communication apparatus 800 and another device. Optionally, the transceiver unit 802 may include a receiving unit and/or a sending unit, which are respectively configured to perform a receiving operation and a sending operation. Optionally, the communication apparatus 800 may further include a storage unit, configured to store program code and/or data of the communication apparatus 800. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing access network device, the first core network device, or the like.

In an embodiment, the transceiver unit 802 is configured to obtain request information of a service requester, where the request information includes an identifier of the service requester. The processing unit 801 is configured to: determine, based on the request information, to perform an operation in batches, and perform the operation on a first terminal. The transceiver unit 802 sends, after the processing unit 801 determines that the operation has been completed on a plurality of terminals in the first terminal, operation information of the plurality of terminals to the service requester, where the first terminal is a to-be-operated terminal.

In an optional implementation, the request information further includes at least one of the following:
a first geographical area in which the first terminal is located, an identifier of the first terminal, and operation type indication information.

In an optional implementation, when the request information is the identifier of the service requester, the processing unit 801 determines to perform the operation in batches, where the first terminal is a subscribed terminal of the service requester.

In an optional implementation, when the request information is the identifier of the service requester and the first geographical area, the processing unit 801 determines to perform the operation in batches, where the first terminal includes a subscribed terminal that is of the service requester and that is covered by the first geographical area.

In an optional implementation, when the request information is the identifier of the service requester, the identifier of the first terminal, and the operation type indication information corresponding to the first terminal, and the same operation type indication information corresponds to identifiers of a plurality of terminals in the first terminal, the processing unit 801 determines to perform the operation in batches.

In an optional implementation, when the request information is the identifier of the service requester, the first geographical area in which the first terminal is located, and the operation type indication information, the processing unit 801 determines to perform the operation in batches.

In an optional implementation, the request information is the identifier of the service requester, and the processing unit 801 obtains subscription data of the service requester based on the identifier of the service requester, where the subscription data includes: a correspondence between the service requester and an operation type and a correspondence between the service requester and a second geographical area; and performs, based on the subscription data, a batch operation corresponding to the operation type on a plurality of terminals covered by the second geographical area.

In an optional implementation, when the request information further includes the operation type indication information, the operation type of the batch operation is determined based on the operation type indication information.

In an optional implementation, the transceiver unit 802 is configured to send a first message to an access network device serving the first terminal, where the first message includes an operation instruction and an indication identifier, the operation instruction triggers the access network device to trigger a plurality of random access procedures, the operation instruction is determined based on the operation type, and the indication identifier has an association relationship with the identifier of the service requester. The processing unit 801 indicates the access network device to perform, based on the operation instruction, a random access procedure one by one on terminals served by the access network device. The transceiver unit 802 receives a second message from the access network device, where the second message includes an identifier of a second terminal and the indication identifier. When the operation type is inventory, if determining, based on the indication identifier, that the second terminal is one terminal in the first terminal, the processing unit 801 caches the identifier of the second terminal; or when the operation type is read, write, or disable, if determining, based on the indication identifier, that the second terminal is one terminal in the first terminal, the processing unit 801 sends read, write, or disable instruction information to the second terminal via the access network device, to obtain and cache operation information of the second terminal.

In an optional implementation, the processing unit 801 is configured to: query, based on the first indication identifier, an identifier list, prestored in a core network device, of subscribed terminals of the service requester; and when determining that the identifier list includes the identifier of the second terminal, determine that the second terminal is one terminal in the first terminal.

In an optional implementation, the transceiver unit 802 is configured to send a first message to an access network device serving the first terminal, where the first message includes an operation instruction and X groups of mask ranges, where X≥1, the operation instruction triggers the access network device to trigger a plurality of random access procedures, and the operation instruction is determined based on an operation type. The processing unit 801 indicates the access network device to perform, based on the operation instruction, a random access procedure one by one on terminals in the X groups of mask ranges. The transceiver unit 802 receives a second message from the access network device, where the second message includes an identifier of a second terminal. When the operation type is inventory, if determining that the second terminal is one terminal in the first terminal, the processing unit 801 caches the identifier of the second terminal; or when the operation type is read, write, or disable, if determining that the second terminal is one terminal in the first terminal, the processing unit 801 sends read, write, or disable instruction information to the second terminal via the access network device, to obtain and cache operation information of the second terminal.

In an optional implementation, the processing unit 801 is configured to: if determining that an operation time threshold is reached, determine that the operation has been completed on a plurality of terminals in the first terminal.

In an optional implementation, the first message further includes an operation time threshold. The transceiver unit 802 is configured to receive a third message from the access network device, where the third message indicates that the operation time threshold is reached. The processing unit 801 is configured to determine, based on the third message, that the operation has been completed on a plurality of terminals in the second terminal.

In an optional implementation, the processing unit 801 is configured to: if determining that an operation life cycle expires, determine that the operation has been completed on a plurality of terminals in the second terminal, where the operation life cycle includes at least one of the following: an operation quantity threshold and the X groups of mask ranges.

In an optional implementation, the first message further includes at least one of the following: an operation quantity threshold and an operation time threshold. The transceiver unit 802 is configured to receive a third message from the access network device, where the third message indicates that the operation quantity threshold and/or the operation time threshold are/is reached. The processing unit 801 is configured to determine, based on the third message, that the operation has been performed in batches on a plurality of terminals in the second terminal.

In an optional implementation, the transceiver unit 802 is configured to send a fourth message to the access network device, where the fourth message indicates the access network device to end performing a random access procedure.

In an optional implementation, when the operation type is inventory, the operation information includes an identifier of a first terminal on which the inventory is successfully performed; or when the operation type is read the operation information includes an identifier of a first terminal that is successfully read and read data.

In still another embodiment, the transceiver unit 802 is configured to receive a first message from a core network device, where the first message includes an operation instruction and an indication identifier, the operation instruction triggers the access network device to trigger a plurality of random access procedures, the operation instruction is determined based on an operation type, and the indication identifier has an association relationship with an identifier of a service requester. The processing unit 801 is configured to perform, based on the operation instruction, a random access procedure one by one on terminals served by the access network device.

In an optional implementation, the transceiver unit 802 is configured to: receive an identifier of a second terminal from the second terminal; and send a second message to the core network device, where the second message further includes the identifier of the second terminal and the indication identifier.

In an optional implementation, the first message further includes an operation time threshold. The transceiver unit 802 is configured to send a third message to the core network device, where the third message indicates that the operation time threshold is reached.

In an optional implementation, the transceiver unit 802 is configured to receive a fourth message from the core network device, where the fourth message indicates the access network device to end performing a random access procedure.

In still another embodiment, the transceiver unit 802 is configured to receive a first message from a core network device, where the first message includes an operation instruction and X groups of mask ranges, where X≥1, the operation instruction triggers an access network device to trigger a plurality of random access procedures, and the operation instruction is determined based on an operation type. The processing unit 801 is configured to perform, based on the operation instruction, a random access procedure one by one on terminals in the X groups of mask ranges.

In an optional implementation, the transceiver unit 802 is configured to: receive an identifier of a second terminal from the second terminal; and send a second message to the core network device, where the second message further includes the identifier of the second terminal.

In an optional implementation, the first message further includes at least one of the following: an operation time threshold and an operation time threshold. The transceiver unit 802 is configured to send a third message to the core network device, where the third message indicates that the operation time threshold is reached.

In an optional implementation, the transceiver unit 802 is configured to receive a fourth message from the core network device, where the fourth message indicates the access network device to end performing a random access procedure.

FIG. 9 shows a communication apparatus 900 further provided in this application. The communication apparatus 900 may be a chip or a chip system. The communication apparatus may be located in a device in any one of the foregoing method embodiments, for example, the access network device or the first core network device, to perform an action corresponding to the device.

Optionally, the chip system may include a chip, or may include a chip and another discrete component.

The communication apparatus 900 includes a processor 910.

The processor 910 is configured to execute a computer program stored in a memory 920, to implement an action of each device in any one of the foregoing method embodiments.

The communication apparatus 900 may further include the memory 920, configured to store the computer program.

Optionally, the memory 920 is coupled to the processor 910. The coupling is an indirect coupling or a communication connection between apparatuses, units, or modules, may be in an electrical form, a mechanical from, or another form, and is used for information exchange between the apparatuses, the units, or the modules. Optionally, the memory 920 and the processor 910 are integrated together.

There may be one or more processors 910 and one or more memories 920. This is not limited.

Optionally, in actual application, the communication apparatus 900 may include or may not include a transceiver 930. A dashed box is used as an example in the figure. The communication apparatus 900 may exchange information with another device through the transceiver 930. The transceiver 930 may be a circuit, a bus, a transceiver, or any other apparatus that may be configured to exchange information.

In a possible implementation, the communication apparatus 900 may be the access network device or the first core network device in the foregoing method embodiments.

In this embodiment of this application, a specific connection medium between the transceiver 930, the processor 910, and the memory 920 is not limited. In this embodiment of this application, the memory 920, the processor 910, and the transceiver 930 are connected through a bus in FIG. 9. The bus is represented by using a thick line in FIG. 9. A manner of a connection between other components is merely an example for description, and is not limited thereto. The bus may be classified into an address bus, a data bus, a control bus, and the like. For ease of representation, only one thick line is used to represent the bus in FIG. 9, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 10. An embodiment of this application further provides another communication apparatus 1000, including an interface circuit 1010 and a logic circuit 1020. The interface circuit 1010 may be understood as an input/output interface, and may be configured to perform sending and receiving steps of each device in any one of the foregoing method embodiments. The logic circuit 1020 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. For example, the method performed by the RAN or the AMF in the embodiment shown in FIG. 5 is implemented. The computer-readable storage medium may include any medium that can store program code, for example, a USB flash drive, a removable hard disk drive, a read-only memory, a random access memory, a magnetic disk, or an optical disc.

Based on the foregoing embodiments, an embodiment of this application provides a communication system. The communication system includes the access network device (for example, the RAN) and the core network device (for example, the AMF) mentioned in any one of the foregoing method embodiments, and may be configured to perform the method performed by each device in any one of the foregoing method embodiments.

In addition, the communication system may further include a terminal (for example, UE). The terminal may perform data exchange with an access network device and a core network device, to perform a related method in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, comprising:
obtaining, by a core network device, request information of a service requester, wherein the request information comprises an identifier of the service requester;
determining, by the core network device based on the request information, to perform an operation in batches, and performing the operation on a first terminal, wherein the first terminal is a to-be-operated terminal; and
sending, by the core network device after determining that the operation has been completed on a plurality of terminals in the first terminal, operation information of the plurality of terminals to the service requester.

2. The method according to claim 1, wherein the request information further comprises at least one of the following:
a first geographical area in which the first terminal is located, an identifier of the first terminal, and operation type indication information.

3. The method according to claim 1 or 2, wherein the determining, by the core network device based on the request information, to perform an operation in batches comprises:
when the request information is the identifier of the service requester, determining, by the core network device, to perform the operation in batches, wherein the first terminal is a subscribed terminal of the service requester.

4. The method according to claim 2, wherein the determining, by the core network device based on the request information, to perform an operation in batches comprises:
when the request information is the identifier of the service requester and the first geographical area, determining, by the core network device, to perform the operation in batches, wherein the first terminal is a subscribed terminal that is of the service requester and that is covered by the first geographical area.

5. The method according to claim 2, wherein the determining, by the core network device based on the request information, to perform an operation in batches comprises:
when the request information is the identifier of the service requester, the identifier of the first terminal, and the operation type indication information corresponding to the first terminal, and the same operation type indication information corresponds to identifiers of a plurality of terminals in the first terminal, determining, by the core network device, to perform the operation in batches.

6. The method according to claim 2, wherein the determining, by the core network device based on the request information, to perform an operation in batches comprises:
when the request information is the identifier of the service requester, the first geographical area in which the first terminal is located, and the operation type indication information, determining, by the core network device, to perform the operation in batches.

7. The method according to claim 1, wherein the performing the operation on a first terminal comprises:
obtaining, by the core network device, subscription data of the service requester based on the identifier of the service requester, wherein the subscription data comprises: a correspondence between the service requester and an operation type and a correspondence between the service requester and a second geographical area; and
performing, by the core network device based on the subscription data, an operation corresponding to the operation type on a plurality of terminals covered by the second geographical area.

8. The method according to claim 5 or 6, wherein the operation type of the operation is determined based on the operation type indication information.

9. The method according to claim 6 or 7, wherein the performing the operation on a first terminal comprises:
sending, by the core network device, a first message to an access network device serving the first terminal, wherein the first message comprises an operation instruction and an indication identifier, the operation instruction triggers the access network device to trigger a plurality of random access procedures, the operation instruction is determined based on the operation type, and the indication identifier has an association relationship with the identifier of the service requester;
indicating, by the core network device, the access network device to perform, based on the operation instruction, a random access procedure one by one on terminals served by the access network device;
receiving, by the core network device, a second message from the access network device, wherein the second message comprises an identifier of a second terminal and the indication identifier; and
when the operation type is inventory, if determining, based on the indication identifier, that the second terminal is one terminal in the first terminal, caching, by the core network device, the identifier of the second terminal; or
when the operation type is read, write, or disable, if determining, based on the indication identifier, that the second terminal is one terminal in the first terminal, sending, by the core network device, read, write, or disable instruction information to the second terminal via the access network device, to obtain and cache operation information of the second terminal.

10. The method according to claim 9, wherein that the core network device determines, based on the indication identifier, that the second terminal is one terminal in the first terminal comprises:
querying, by the core network device based on the indication identifier, an identifier list that is of subscribed terminals of the service requester and that is prestored in the core network device; and
when determining that the identifier list comprises the identifier of the second terminal, determining, by the core network device, that the second terminal is one terminal in the first terminal.

11. The method according to claim 5, wherein the performing the operation on a first terminal comprises:
sending, by the core network device, a first message to an access network device serving the first terminal, wherein the first message comprises an operation instruction and X groups of mask ranges, wherein X≥1, the operation instruction triggers the access network device to trigger a plurality of random access procedures, and the operation instruction is determined based on an operation type;
indicating, by the core network device, the access network device to perform, based on the operation instruction, a random access procedure one by one on terminals in the X groups of mask ranges;
receiving, by the core network device, a second message from the access network device, wherein the second message comprises an identifier of a second terminal; and
when the operation type is inventory, if determining that the second terminal is one terminal in the first terminal, caching, by the core network device, the identifier of the second terminal; or
when the operation type is read, write, or disable, if determining that the second terminal is one terminal in the first terminal, sending, by the core network device, read, write, or disable instruction information to the second terminal via the access network device, to obtain and cache operation information of the second terminal.

12. The method according to any one of claims 9 to 11, wherein the determining, by the core network device, that the operation has been completed on a plurality of terminals in the first terminal comprises:
if determining that an operation time threshold is reached, determining, by the core network device, that the operation has been completed on a plurality of terminals in the first terminal.

13. The method according to claim 12, wherein the determining, by the core network device, that the operation has been completed on a plurality of terminals in the first terminal comprises:
if determining that an operation life cycle expires, determining, by the core network device, that the operation has been completed on a plurality of terminals in the first terminal, wherein the operation life cycle comprises at least one of the following: an operation quantity threshold and the X groups of mask ranges.

14. The method according to any one of claims 1 to 13, wherein when the operation type is inventory, the operation information comprises an identifier of a first terminal on which the inventory is successfully performed; or
when the operation type is read, the operation information comprises an identifier of a first terminal that is successfully read and read data.

15. A communication method, comprising:
receiving, by an access network device, a first message from a core network device, wherein the first message comprises an operation instruction and an indication identifier, the operation instruction triggers the access network device to trigger a plurality of random access procedures, the operation instruction is determined based on an operation type, and the indication identifier has an association relationship with an identifier of a service requester; and
performing, by the access network device based on the operation instruction, a random access procedure one by one on terminals served by the access network device.

16. The method according to claim 15, wherein the method further comprises:
receiving, by the access network device, an identifier of a second terminal from the second terminal; and
sending, by the access network device, a second message to the core network device, wherein the second message comprises the identifier of the second terminal and the indication identifier.

17. A communication method, comprising:
receiving, by an access network device, a first message from a core network device, wherein the first message comprises an operation instruction and X groups of mask ranges, wherein X≥1, the operation instruction triggers the access network device to trigger a plurality of random access procedures, and the operation instruction is determined based on an operation type; and
performing, by the access network device based on the operation instruction, a random access procedure one by one on terminals in the X groups of mask ranges.

18. The method according to claim 17, wherein the method further comprises:
receiving, by the access network device, an identifier of a second terminal from the second terminal; and
sending, by the access network device, a second message to the core network device, wherein the second message comprises the identifier of the second terminal.

19. A communication apparatus, comprising:
a transceiver unit, configured to obtain request information of a service requester, wherein the request information comprises an identifier of the service requester; and
a processing unit, configured to: determine, based on the request information, to perform an operation in batches, and perform the operation on a first terminal, wherein the first terminal is a to-be-operated terminal, wherein
the transceiver unit is further configured to send, after determining that the operation has been completed on a plurality of terminals in the first terminal, operation information of the plurality of terminals to the service requester.

20. The apparatus according to claim 19, wherein the request information further comprises at least one of the following:
a first geographical area in which the first terminal is located, an identifier of the first terminal, and operation type indication information.

21. The apparatus according to claim 19 or 20, wherein when the request information is the identifier of the service requester, the processing unit is specifically configured to determine to perform the operation in batches, wherein the first terminal is a subscribed terminal of the service requester.

22. The apparatus according to claim 20, wherein when the request information is the identifier of the service requester and the first geographical area, the processing unit is specifically configured to determine to perform the operation in batches, wherein the first terminal is a subscribed terminal that is of the service requester and that is covered by the first geographical area.

23. The apparatus according to claim 20, wherein when the request information is the identifier of the service requester, the identifier of the first terminal, and the operation type indication information corresponding to the first terminal, and the same operation type indication information corresponds to identifiers of a plurality of terminals in the first terminal, the processing unit is specifically configured to determine to perform the operation in batches.

24. The apparatus according to claim 20, wherein when the request information is the identifier of the service requester, the first geographical area in which the first terminal is located, and the operation type indication information, the processing unit is specifically configured to determine to perform the operation in batches.

25. The apparatus according to claim 19, wherein the processing unit is specifically configured to:
obtain subscription data of the service requester based on the identifier of the service requester, wherein the subscription data comprises: a correspondence between the service requester and an operation type and a correspondence between the service requester and a second geographical area; and
perform, based on the subscription data, an operation corresponding to the operation type on a plurality of terminals covered by the second geographical area.

26. The apparatus according to claim 23 or 24, wherein the operation type of the operation is determined based on the operation type indication information.

27. The apparatus according to claim 24 or 25, wherein the transceiver unit is further configured to send a first message to an access network device serving the first terminal, wherein the first message comprises an operation instruction and an indication identifier, the operation instruction triggers the access network device to trigger a plurality of random access procedures, the operation instruction is determined based on the operation type, and the indication identifier has an association relationship with the identifier of the service requester;
the processing unit is further configured to indicate the access network device to perform, based on the operation instruction, a random access procedure one by one on terminals served by the access network device;
the transceiver unit is further configured to receive a second message from the access network device, wherein the second message comprises an identifier of a second terminal and the indication identifier; and
when the operation type is inventory, the processing unit is specifically configured to: if determining, based on the indication identifier, that the second terminal is one terminal in the first terminal, cache the identifier of the second terminal; or
when the operation type is read, write, or disable, the processing unit is specifically configured to: if determining, based on the indication identifier, that the second terminal is one terminal in the first terminal, send read, write, or disable instruction information to the second terminal via the access network device, to obtain and cache operation information of the second terminal.

28. The apparatus according to claim 27, wherein the processing unit is specifically configured to: query, based on the indication identifier, an identifier list that is of subscribed terminals of the service requester and that is prestored in the core network device; and when determining that the identifier list comprises the identifier of the second terminal, determine that the second terminal is one terminal in the first terminal.

29. The apparatus according to claim 23, wherein the transceiver unit is further configured to send a first message to an access network device serving the first terminal, wherein the first message comprises an operation instruction and X groups of mask ranges, wherein X≥1, the operation instruction triggers the access network device to trigger a plurality of random access procedures, and the operation instruction is determined based on an operation type;
the processing unit is further configured to indicate the access network device to perform, based on the operation instruction, a random access procedure one by one on terminals in the X groups of mask ranges;
the transceiver unit is further configured to receive a second message from the access network device, wherein the second message comprises an identifier of a second terminal; and
when the operation type is inventory, the processing unit is further configured to: if determining that the second terminal is one terminal in the first terminal, cache the identifier of the second terminal; or
when the operation type is read, write, or disable, the processing unit is further configured to: if determining that the second terminal is one terminal in the first terminal, send read, write, or disable instruction information to the second terminal via the access network device, to obtain and cache operation information of the second terminal.

30. The apparatus according to any one of claims 27 to 29, wherein the processing unit is further configured to: if determining that an operation time threshold is reached, determine that the operation has been completed on a plurality of terminals in the first terminal.

31. The apparatus according to claim 30, wherein the processing unit is further configured to: if determining that an operation life cycle expires, determine that the operation has been completed on a plurality of terminals in the first terminal, wherein the operation life cycle comprises at least one of the following: an operation quantity threshold and the X groups of mask ranges.

32. The apparatus according to any one of claims 19 to 31, wherein when the operation type is inventory, the operation information comprises an identifier of a first terminal on which the inventory is successfully performed; or
when the operation type is read, the operation information comprises an identifier of a first terminal that is successfully read and read data.

33. A communication apparatus, comprising:
a transceiver unit, configured to receive a first message from a core network device, wherein the first message comprises an operation instruction and an indication identifier, the operation instruction triggers an access network device to trigger a plurality of random access procedures, the operation instruction is determined based on an operation type, and the indication identifier has an association relationship with an identifier of a service requester; and
a processing unit, configured to perform, based on the operation instruction, a random access procedure one by one on terminals served by the access network device.

34. The apparatus according to claim 33, wherein
the transceiver unit is further configured to receive an identifier of a second terminal from the second terminal; and
the transceiver unit is further configured to send a second message to the core network device, wherein the second message comprises the identifier of the second terminal and the indication identifier.

35. A communication apparatus, comprising:
a transceiver unit, configured to receive a first message from a core network device, wherein the first message comprises an operation instruction and X groups of mask ranges, wherein X≥1, the operation instruction triggers an access network device to trigger a plurality of random access procedures, and the operation instruction is determined based on an operation type; and
a processing unit, configured to perform, based on the operation instruction, a random access procedure one by one on terminals in the X groups of mask ranges.

36. The apparatus according to claim 35, wherein the transceiver unit is further configured to receive an identifier of a second terminal from the second terminal; and
the transceiver unit is further configured to send a second message to the core network device, wherein the second message comprises the identifier of the second terminal.

37. A communication apparatus, comprising at least one processor and a memory, wherein
the memory is configured to store a computer program or instructions; and
the at least one processor is configured to execute the computer program or the instructions, to perform the method according to any one of claims 1 to 18.

38. A chip system, wherein the chip system comprises a processing circuit, and the processing circuit is coupled to a storage medium; and
the processing circuit is configured to: execute a part or all of a computer program or instructions in the storage medium; and when the part or all of the computer program or the instructions is executed, implement the method according to any one of claims 1 to 18.

39. A computer-readable storage medium, wherein the computer-readable storage medium stores instructions; and when the instructions are executed by a computer, the method according to any one of claims 1 to 18 is performed.

40. A computer program product comprising a computer program or instructions, wherein when the computer program product runs on a computer, the method according to any one of claims 1 to 18 is performed.
